(19) Europäisches Patentamt / European Patent Office / Office européen des brevets

(11) **EP 3 375 582 A1**

(12) **EUROPEAN PATENT APPLICATION**
published in accordance with Art. 153(4) EPC

(43) Date of publication:
**19.09.2018 Bulletin 2018/38**

(21) Application number: **16864260.1**

(22) Date of filing: **09.11.2016**

(51) Int Cl.:
**B28B 3/20** (2006.01)   **C04B 35/632** (2006.01)

(86) International application number:
**PCT/JP2016/083241**

(87) International publication number:
**WO 2017/082299 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.11.2015 JP 2015223289**

(71) Applicant: **Asahi Kasei Kabushiki Kaisha**
**Chiyoda-ku**
**Tokyo 101-8101 (JP)**

(72) Inventors:
• **ENATSU, Kouichirou**
  **Tokyo 101-8101 (JP)**
• **YAMASAKI, Naoaki**
  **Tokyo 101-8101 (JP)**

(74) Representative: **Hoffmann Eitle**
**Patent- und Rechtsanwälte PartmbB**
**Arabellastraße 30**
**81925 München (DE)**

(54) **METHOD FOR PRODUCING CERAMIC GREEN BODY MOLDED ARTICLE AND CERAMIC MOLDED ARTICLE**

(57)    The present invention provides a method for producing a ceramic green body molded article, comprising: a raw material blending step of kneading 100 parts by mass of a ceramic raw material with 0.1 to 20 parts by mass of a cellulose complex comprising cellulose and a water-soluble polymer to obtain a kneaded product; and a step of molding the kneaded product.

**Description**

Technical Field

The present invention relates to methods for producing a ceramic green body molded article and a ceramic molded article.

Background Art

In recent years, ceramic molded articles have been widely used in capacitors, IC substrates, piezoelectric components, filters to collect fine particles in automobile exhaust gases, etc. In these fields, methods which involve adding water and an optional additive such as a water-soluble binder to a raw material powder such as alumina or cordierite, and imparting plasticity to green body by kneading, followed by extrusion have conventionally been used. The molded articles thus obtained are commercialized as products of calcined ceramics through drying and calcination. This extrusion method is routinely used because of high productivity and a relatively convenient process.

Honeycomb ceramics, one of the functional ceramics, have received attention as catalyst supports that convert harmful carbon monoxide, fuel degradation products, nitrogen oxide, and the like contained in exhaust gases of automobiles, etc. to harmless carbon dioxide, water, nitrogen, and the like. Particularly, honeycomb ceramics containing cordierite are finely processed with ease and have a small coefficient of thermal expansion and excellent heat resistance and thermal shock resistance. Therefore, such honeycomb ceramics are installed in the exhaust lines of diesel engines in automobiles, etc.

In this context, the conversion efficiency of the honeycomb ceramic depends on a surface area per unit volume. Specifically, in order to enhance this conversion efficiency, various studies have been made on fine processing of, for example, making a larger number of honeycomb cells and thinner cell partitions (ribs) while maintaining the dimensional accuracy and strength thereof.

Patent Literature 1 describes a method for producing a high-density ceramic, comprising adding 0.1 to 20 parts by weight of fine cellulose based on 100 parts by weight of a ceramic raw material powder, followed by kneading and molding, wherein the fine cellulose has an average particle size of 8 microns or smaller and contains 20% or less of particles of 10 microns or larger.

Example 2 of Patent Literature 2 describes a method which involves using cotton linter as a raw material, blending methylcellulose having a solid content of 10% with cellulose crystallite aggregates having all particles of 1 μ or smaller in diameter, adding the obtained powder at a proportion of 0.4 to 20.0% to a ceramic raw material, adding a 2.0% carboxymethylcellulose solution thereto, and kneading the mixture in a planetary mixer to obtain ceramic green body.

Citation List

Patent Literature

Patent Literature 1: Japanese Patent Laid-Open No. 7-33534
Patent Literature 2: Japanese Patent Publication No. 51-18441

Summary of Invention

Technical Problem

Use of the method of Patent Literature 1 surely improves the green strength, shape retainability, and dimensional stability of an uncalcined ceramic green body molded article. Similarly, the method of Patent Literature 2 enhances green body hardness at a usual ratio between a ceramic powder and water and also exerts shape retainability.

However, the methods described in these literatures have the difficulty in producing favorable molded articles for purposes of the aforementioned honeycomb ceramics required to have excellent dimensional accuracy and strength. The methods described in these literatures present the problem that cracks occur easily and a favorable molded article is not obtained, due to a high electric power of extrusion or uneven stress transfer during passage through a die.

In light of the problems mentioned above, an object of the present invention is to provide a method for producing a ceramic green body molded article that is excellent in the plasticity, green strength, and shape retainability of green body, is free from defects such as cracks at the time of extrusion, and can be finely processed with ease.

Solution to Problem

The present inventors have found that a ceramic green body molded article that has favorable plasticity, high green strength, and excellent shape retainability, is free from defects such as cracks at the time of extrusion, and can be finely processed with ease is obtained by kneading a cellulose complex containing cellulose and a water-soluble polymer together with a ceramic raw material. The present inventors have also found that the cellulose complex imparts thixotropy to green body, whereby a small electric power of extrusion suffices for green body having the same green strength, and energy saving can be achieved. On the basis of these findings, the present invention has been completed.
Specifically, the present invention is as follows:

[1] A method for producing a ceramic green body molded article, comprising:

a raw material blending step of kneading 100 parts by mass of a ceramic raw material with 0.1 to 20 parts by mass of a cellulose complex comprising cellulose and a water-soluble polymer to obtain a kneaded product; and
a step of molding the kneaded product.

[2] The method for producing the ceramic green body molded article according to [1], wherein the cellulose complex comprises 30 to 99% by mass of the cellulose and 1 to 70% by mass of the water-soluble polymer.
[3] The method for producing the ceramic green body molded article according to [1] or [2], wherein a binding ratio of the water-soluble polymer in the cellulose complex is 50% by mass or more.
[4] The method for producing the ceramic green body molded article according to any of [1] to [3], wherein the cellulose complex satisfies following requirement:
(Requirement)
when viscosities of a water dispersion containing 1.0% by mass of the cellulose complex is measured at 25°C and 60°C, a viscosity ratio therebetween (the viscosity at 60°C/the viscosity at 25°C) is 0.70 or more.
[5] The method for producing the ceramic green body molded article according to any of [1] to [4], wherein the water-soluble polymer comprised in the cellulose complex is a polysaccharide.
[6] A method for producing a ceramic molded article, comprising:

a raw material blending step of kneading 100 parts by mass of a ceramic raw material with 0.1 to 20 parts by mass of a cellulose complex comprising cellulose and a water-soluble polymer to obtain a kneaded product;
a step of molding the kneaded product to obtain a ceramic green body molded article; and
a step of subjecting the ceramic green body molded article to a drying and preliminary calcination step, followed by further calcination to obtain a ceramic molded article.

[7] The method for producing the ceramic molded article according to [6], wherein the cellulose complex comprises 30 to 99% by mass of the cellulose and 1 to 70% by mass of the water-soluble polymer.
[8] The method for producing the ceramic molded article according to [6] or [7], wherein a binding ratio of the water-soluble polymer in the cellulose complex is 50% by mass or more.
[9] The method for producing the ceramic molded article according to any of [6] to [8], wherein the cellulose complex satisfies following requirement:
(Requirement)
when viscosities of a water dispersion containing 1.0% by mass of the cellulose complex is measured at 25°C and 60°C, a viscosity ratio therebetween (the viscosity at 60°C/the viscosity at 25°C) is 0.70 or more.
[10] The method for producing the ceramic molded article according to any of [6] to [9], wherein the water-soluble polymer comprised in the cellulose complex is a polysaccharide.
[11] The ceramic molded article according to any of claims [1] to [10], wherein the ceramic molded article satisfies at least a BET specific surface area of less than 0.010 $m^2$/g or a pore volume of less than 0.60 $m^3$/g in a nitrogen adsorption method.
[12] The ceramic molded article according to [11], wherein the ceramic molded article comprises a thin-film structure in a portion of a structure, and the film thickness is 6 mils or smaller.

Advantageous Effects of Invention

The present invention can provide a method for producing a ceramic green body molded article that has favorable plasticity, high green strength, and excellent shape retainability in the wet kneading of a ceramic powder in an aqueous system, is free from defects such as cracks at the time of extrusion, and can be finely processed with ease. The present invention can also provide a method by which a small electric power of extrusion suffices for green body having the same green strength, and energy saving can be achieved.

Brief Description of Drawings

[Figure 1] Figure 1 shows an electron microscope image of a ceramic green body molded article (before calcination) of Example 13 of the present application.
[Figure 2] Figure 2 shows an electron microscope image of a ceramic molded article (after calcination) of Example 13 of the present application.
[Figure 3] Figure 3 shows an electron microscope image of a ceramic green body molded article (before calcination) of Comparative Example 6 of the present application.
[Figure 4] Figure 4 shows an electron microscope image of a ceramic molded article (after calcination) of Comparative Example 6 of the present application.
[Figure 5] Figure 5 shows an electron microscope image of a ceramic green body molded article (before calcination) of Comparative Example 7 of the present application.
[Figure 6] Figure 6 shows an electron microscope image of a ceramic molded article (after calcination) of Comparative Example 7 of the present application.

Description of Embodiments

Hereinafter, the mode for carrying out the present invention (hereinafter, referred to as the "present embodiment") will be described in detail. The present invention is not limited by the present embodiment given below. The present invention can be carried out by appropriately making changes or modifications without departing from the spirit of the present invention.

<<Method for producing ceramic green body molded article>>

The method for producing a ceramic green body molded article according to the present embodiment comprises: a raw material blending step of kneading 100 parts by mass of a ceramic raw material with 0.1 to 20 parts by mass of a cellulose complex containing cellulose and a water-soluble polymer to obtain a kneaded product; and a step of molding the kneaded product.
In the method for producing a ceramic green body molded article according to the present embodiment, a cellulose complex is used. In this context, the cellulose complex refers to cellulose and a water-soluble polymer bound through a chemical bond such as a hydrogen bond or intermolecular force. Examples of the cellulose complex include crystalline cellulose particles surface-covered with a water-soluble polymer.

<Cellulose>

In the present embodiment, the "cellulose" is a naturally derived water-insoluble fibrous substance containing cellulose. Examples of the raw material include, but are not particularly limited to, wood, bamboo, straw, rice straw, cotton, ramie, bagasse, kenaf, beet, sea squirt, and bacterial cellulose. Among these raw materials, one natural cellulosic substance may be used, or a mixture of two or more thereof may be used.

<Average degree of polymerization of cellulose>

The cellulose used in the present embodiment is preferably crystalline cellulose having an average degree of polymerization of 500 or less. The average degree of polymerization can be measured by the reduced specific viscosity method using a copper ethylenediamine solution as specified by Confirmatory Test for Crystalline Cellulose (3) in "Japanese Pharmacopoeia, 14th Edition" (published by Hirokawa-Shoten Ltd.). The average degree of polymerization of 500 or less is preferred for the cellulose because the cellulosic substance easily undergoes physical treatment such as stirring, pulverization, or grinding in the process of complexation with the water-soluble polymer and thus facilitates accelerating the complexation. The average degree of polymerization of the cellulose is more preferably 300 or less, further preferably 250 or less. The complexation of cellulose having a smaller average degree of polymerization is more easily controlled. Therefore, the lower limit is not particularly limited and is preferably in the range of 10 or more.

<Hydrolysis of cellulose>

Examples of the method for controlling the average degree of polymerization of the cellulose include hydrolysis treatment. By the hydrolysis treatment, the depolymerization of amorphous cellulose in the inside of cellulose fibers proceeds to decrease the average degree of polymerization of the cellulose. At the same time, by the hydrolysis treatment, impurities such as hemicellulose and lignin in addition to the aforementioned amorphous cellulose are removed so that the inside of the fibers is rendered porous. The resulting cellulose easily undergoes machine processing in a process, such as a kneading process, of applying mechanical shearing force to the cellulose and the water-soluble polymer and is thus easily rendered fine. As a result, the surface area of the cellulose is elevated, and the complexation with the water-soluble polymer is easily controlled.

Examples of the hydrolysis method include, but are not particularly limited to, acid hydrolysis, hydrothermal degradation, steam explosion, and microwave degradation. These methods may each be used alone or may be used in combination of two or more thereof. The acid hydrolysis method can easily control the average degree of polymerization of the cellulose by adding an appropriate amount of protonic acid, carboxylic acid, Lewis acid, heteropoly acid, or the like to the cellulosic substance in a state dispersed in an aqueous medium and warming the mixture with stirring. In this respect, the reaction conditions such as temperature, pressure, and time differ depending on a cellulose type, a cellulose concentration, an acid type, and an acid concentration and are appropriately adjusted so as to achieve the average degree of polymerization of interest. Examples thereof include conditions under which the cellulose is treated at 100°C or higher under increased pressure for 10 minutes or longer using an aqueous solution containing 2% by mass or less of a mineral acid. Under the conditions, a catalytic component such as an acid penetrates the inside of the cellulose fibers to accelerate hydrolysis. Furthermore, the amount of the catalytic component used is decreased, and subsequent purification also becomes easy.

<Crystallinity of cellulose>

Preferably, the cellulose in the cellulose complex used in the present embodiment contains cellulose type I crystals, and the crystallinity thereof is 10% or more. In this context, the crystallinity is determined according to the following expression by the Segal method from a diffraction pattern ($2\theta$/deg.: 10 to 30) measured by the wide-angle X-ray diffractometry of the cellulose:

```
Crystallinity (%) = ((Diffraction intensity attributed to
the (200) plane at 2θ/deg. = 22.5) - (Diffraction
intensity attributed to an amorphous form at 2θ/deg. =
18)) / ((Diffraction intensity attributed to the (200)
plane at 2θ/deg. = 22.5) x 100.
```

Higher crystallinity of the cellulose is more preferred because the shape retainability of ceramic green body is enhanced. The crystallinity is more preferably in the range of 30% or more, further preferably in the range of 50% or more, particularly preferably 70% or more. The upper limit of the crystallinity of the cellulose is not particularly limited and is preferably 90% or less.

<Particle shape of cellulose (L/D)>

Preferably, the cellulose in the cellulose complex used in the present embodiment has a fine particle shape. The particle shape of the cellulose is indicated by the ratio between a major axis (L) and a minor axis (D) (L/D) in a particle image obtained by the following method: the cellulose complex used in the present embodiment was prepared into a pure water suspension having a concentration of 1% by mass. The pure water suspension was dispersed in a high-shear homogenizer (manufactured by Nippon Seiki Co., Ltd., trade name "Excel Auto Homogenizer ED-7", treatment conditions: the number of revolutions of 15,000 rpm $\times$ 5 minutes) to obtain a water dispersion. The water dispersion was diluted into 0.1 to 0.5% by mass with pure water, casted onto mica, and dried in air. The resultant was measured under a high-resolution scanning microscope (SEM) or an atomic force microscope (AFM). The major axes (L) and minor axes (D) of arbitrarily selected 100 to 150 particles in the particle images obtained by the measurement were measured, and an average ratio therebetween (L/D) was used as L/D of cellulose particles.

<Water-soluble polymer>

The water-soluble polymer contained in the cellulose complex used in the present embodiment is preferably a polymer substance having a number-average molecular weight of 1800 or larger. Also, the water-soluble polymer preferably contains a water-soluble component at 10% or more of the total solute concentration in a filtrate obtained by dissolving the water-soluble polymer at a concentration of 0.5% by mass in ion-exchange water and passing a predetermined amount of this solution through a membrane filter (made of PVDF, etc.) having an opening of 0.1 $\mu$m.

The aforementioned number-average molecular weight can be measured by the following gel permeation chromatography: in a high-performance liquid chromatography (HPLC) apparatus under a trade name of LC-20A manufactured by Shimadzu Corp., one column under a trade name of TSK-GEL G5000PW manufactured by Tosoh Corp. (7.8 mm x 30 cm) and two columns under a trade name of TSK-GEL G3000PWXL (7.8 mm x 30 cm) are connected in series, and a 0.05 mol/L aqueous sodium hydroxide solution is used as a mobile phase. The number-average molecular weight is determined from a chromatogram obtained by measurement at a mobile phase flow rate of 1 mL/min at a column temperature of 30°C using a RI detector or a UV detector (wavelength: 210 nm). Here, a value based on pullulan standards is used.

The water-soluble polymer used can be used in a form completely dissolved in the same solution as the mobile phase described above, and is appropriately adjusted in the concentration range of 0.01 to 1.0% by mass, and the injection volume is 5 to 10 $\mu$L/run for the measurement.

The water-soluble polymer used in the present embodiment is preferably a water-soluble polymer that satisfies the characteristics described above. Specific examples of such a water-soluble polymer include, but are not particularly limited to: synthetic polymer compounds such as polyvinyl alcohol, polyethylene oxide, sodium polyacrylate, and polyacrylamide; and polysaccharides including cellulosic compounds such as methylcellulose, hydroxypropylmethylcellulose, carboxymethylcellulose, hydroxyethylcellulose, and their salts, starch compounds such as starch and processed starch, and natural polysaccharides such as locust bean gum, guar gum, tamarind seed gum, quince seed gum, karaya gum, chitin, chitosan, gum arabic, gum tragacanth, gum ghatti, arabinogalactan, agar, carrageenan ($\iota$, $\lambda$, and $\kappa$), alginic acid and its salt, alginic acid propylene glycol ester, furcellaran, pectin, tara gum, almond gum, *Aeromonas* gum, *Azotobacter vinelandii* gum, linseed gum, welan gum, psyllium seed gum, xanthan gum, curdlan, pullulan, gellan gum, and water-soluble soybean polysaccharides. These water-soluble polymers may each be used alone or may be used in combination of two or more thereof.

This water-soluble polymer preferably has a specific molecular weight for accelerating the complexation with the cellulose. The number-average molecular weight of the water-soluble polymer is more preferably 1800 to 1000000, further preferably 5000 to 700000, particularly preferably 10000 to 650000.

It is preferred to select a water-soluble polymer having a backbone structure similar to that of the cellulose, for accelerating the complexation with the cellulose. It is preferred to select a polysaccharide among those mentioned above.

Among the polysaccharides, cellulosic compounds such as hydroxypropylmethylcellulose, carboxymethylcellulose, hydroxyethylcellulose, and their salts, and natural polysaccharides such as karaya gum, xanthan gum, gellan gum, and their salts are preferred because of being easily complexed with the cellulose.

Further preferably, methylcellulose, hydroxypropylmethylcellulose, carboxymethylcellulose, xanthan gum, and their salts, etc. are used, which are $\beta$-1,4-glucans having the same backbone as that of the cellulose.

Among those mentioned above, an anionic polysaccharide carboxymethylcellulose sodium or xanthan gum is preferred because of being easily complexed with the cellulose.

Hereinafter, these polysaccharides will be described.

<Carboxymethylcellulose sodium>

Among the anionic polysaccharides mentioned above, carboxymethylcellulose sodium (hereinafter, also referred to as "CMC-Na") is also preferred because of being easily complexed with the cellulose. In this context, CMC-Na has a linear chemical structure in which the hydroxy group of cellulose is substituted by monochloroacetic acid and D-glucose is bound through a $\beta$-1,4 bond. CMC-Na is obtained by dissolving pulp (cellulose) in a sodium hydroxide solution and etherifying the cellulose with monochloroacetic acid (or its sodium salt).

Particularly, it is preferred to use CMC-Na having a degree of substitution and a viscosity adjusted to specific ranges, from the viewpoint of the complexation. The degree of substitution refers to the degree of binding of carboxymethyl groups via ether bonds to hydroxy groups in cellulose, and is preferably 0.6 to 2.0. The degree of substitution that falls within the range described above is preferred because a higher degree of substitution facilitates the complexation with the cellulose, enhances the storage elastic modulus of the cellulose complex, and can exert high suspension stability even in an aqueous solution having a high salt concentration (e.g., an aqueous solution containing 10% by mass of sodium chloride). The degree of substitution is more preferably 0.6 to 1.3.

The viscosity of CMC-Na is preferably 500 mPa·s or lower in a pure water solution having a concentration of 1% by mass. In this context, the viscosity is measured by the following method: first, a powder of CMC-Na is dispersed at a concentration of 1% by mass in pure water using a high-shear homogenizer (manufactured by Nippon Seiki Co., Ltd., trade name "Excel Auto Homogenizer ED-7", treatment conditions: the number of revolutions of 15,000 rpm × 5 minutes) to prepare an aqueous solution. Next, the obtained aqueous solution is loaded, after 3 hours (preservation at 25°C) from the dispersion, in a type B viscometer (the number of rotor revolutions: 60 rpm), left standing for 60 seconds, and then rotated for 30 seconds, followed by viscosity measurement. However, the rotor can be appropriately changed according to the viscosity. A lower viscosity of CMC-Na facilitates accelerating the complexation of the anionic polysaccharide with the cellulose. Therefore, the viscosity of CMC-Na is more preferably 200 mPa·s or lower, further preferably 100 mPa·s or lower. The lower limit of the viscosity of CMC-Na is not particularly set and is preferably in the range of 10 mPa·s or higher. Two or more types differing in viscosity may be combined.

<Xanthan gum>

Among the anionic polysaccharides mentioned above, xanthan gum is preferred because of being easily complexed with the cellulose. The "xanthan gum" is a fermented polysaccharide produced by a microbe *Xanthomonas campestris* and is an anionic polysaccharide in which a side chain consisting of D-mannose, D-glucuronic acid, and D-mannose is bound to the principal chain backbone of β-1,4-D-glucan. The C6 position of the D-mannose bound to the principal chain is acetylated, and the terminal D-mannose is bound to pyruvic acid via acetal. The xanthan gum used in the present embodiment is not particularly limited, and xanthan gum having an acetyl group content of 1% or less or standard xanthan gum having an acetyl group content on the order of 2 to 6% may be used.
Xanthan gum having a lower viscosity is also more easily complexed with the cellulose. The viscosity measured at a concentration of 0.5% by mass in the aforementioned method for measuring the viscosity of carboxymethylcellulose is preferably 2000 mPa·s or lower, more preferably 1000 mPa·s or lower, further preferably 500 mPa·s or lower. The lower limit of the viscosity is not particularly set and is preferably in the range of 10 mPa·s or higher. Two or more types differing in viscosity may be combined.

<Blending ratio between cellulose and water-soluble polymer>

The cellulose complex used in the present embodiment preferably contains 30 to 99% by mass of the cellulose and 1 to 70% by mass of the water-soluble polymer. By complexation, the surface of cellulose particles is covered with the water-soluble polymer through a chemical bond such as a hydrogen bond, whereby: the green strength and plasticity of green body is enhanced when the cellulose complex is dispersed in a ceramic aqueous mixture, the surface is smooth when green body is extruded; and structural defects such as cracks and the electric power of extrusion can be reduced. The aforementioned composition of the cellulose and the water-soluble polymer accelerates the complexation and permits further enhancement in the extrudability and shape retainability of ceramic green body. The cellulose complex used in the present embodiment more preferably contains 50 to 99% by mass of the cellulose and 1 to 50% by mass of the water-soluble polymer, further preferably 70 to 99% by mass of the cellulose and 1 to 30% by mass of the water-soluble polymer, particularly preferably 80 to 99% by mass of the cellulose and 1 to 20% by mass of the water-soluble polymer.

<Hydrophilic substance>

The cellulose complex used in the present embodiment may be supplemented with a hydrophilic substance, in addition to the water-soluble polymer, for the purpose of enhancing dispersibility in water. The hydrophilic substance is an organic substance that has high solubility in cold water and brings about almost no viscosity. The hydrophilic substance preferably has a number-average molecular weight of smaller than 1800. The hydrophilic substance preferably contains a water-soluble component at 10% or more of the total solute concentration in a filtrate obtained by dissolving the hydrophilic substance at a concentration of 0.5% by mass in ion-exchange water and passing a predetermined amount of this solution through a membrane filter (made of PVDF, etc.) having an opening of 0.1 μm.
For example, hydrophilic saccharides such as starch hydrolysates and dextrins, oligosaccharides such as fructooligosaccharide, galactooligosaccharide, maltooligosaccharide, isomaltooligosaccharide, lactose, maltose, sucrose, and α-, β-, and γ-cyclodextrins, monosaccharides such as glucose, fructose, and sorbose, and sugar alcohols such as maltitol, sorbitol, and erythritol are suitable as the hydrophilic substance. Two or more types of these hydrophilic substances may be combined. Among those mentioned above, hydrophilic polysaccharides such as starch hydrolysates, dextrins, indigestible dextrin, and polydextrose are preferred from the viewpoint of dispersibility.
As for the blending of other components, any component can be blended without inhibiting the dispersibility and stability of the composition in water.

<Method for producing cellulose complex>

Next, the method for producing the cellulose complex used in the present embodiment will be described.

The cellulose complex used in the present embodiment is obtained by applying mechanical shearing force to the cellulose and the water-soluble polymer in a kneading process so that the cellulose is rendered fine while the water-soluble polymer is complexed with the cellulose surface. In this kneading process, a hydrophilic substance other than the water-soluble polymer, and other additives, etc. may be added. The product thus treated is dried, if necessary. The cellulose complex may be in any form such as an undried form that has undergone the mechanical shear mentioned above, or a subsequently dried form.

A kneading method using a kneading machine or the like can be used for applying the mechanical shearing force. A kneader, an extruder, a planetary mixer, a grinding mixer, or the like can be used as the kneading machine, and a continuous type or a batch type may be used. The kneading temperature may be ambient temperature. When heat is generated due to complexation reaction, friction, etc. during the kneading, the kneading may be performed while this heat is removed. These machines may each be used alone, or two or more of the machines may be used in combination. These machines can be appropriately selected according to the viscosity requirements of ceramic green body, etc.

A lower kneading temperature is more preferred because of suppressing the deterioration of the water-soluble polymer and accelerating the complexation between the cellulose and the water-soluble polymer. The kneading temperature is preferably 0 to 100°C, more preferably 90°C or lower, still more preferably 70°C or lower, further preferably 60°C or lower, particularly preferably 50°C or lower. Heat removal such as jacket cooling or heat dissipation may be devised in order to maintain the kneading temperature described above under high energy.

The solid content at the time of kneading is preferably 20% by mass or more. Kneading in a semisolid state where the kneaded product is highly viscous is preferred because the kneaded product is prevented from becoming loose, and kneading energy mentioned below is easily transferred to the kneaded product to accelerate the complexation. The solid content at the time of kneading is more preferably 30% by mass or more, further preferably 40% by mass or more, particularly preferably 50% by mass or more. The upper limit of the solid content at the time of kneading is not particularly limited and is preferably 90% by mass or less in consideration of obtaining a sufficient kneading effect and a uniform kneaded state. The upper limit is more preferably 70% by mass or less, further preferably 60% by mass or less. As for the timing of addition of water in order to adjust the solid content to the range described above, a necessary amount of water may be added before the kneading process, or water may be added in the middle of the kneading process, or both may be carried out.

Here, the kneading energy will be described. The kneading energy is defined as the amount (Wh/kg) of electric power per unit mass of the kneaded product. The kneading energy is preferably 50 Wh/kg or larger. The kneading energy of 50 Wh/kg or larger imparts high grinding properties to the kneaded product and accelerates the complexation between the cellulose and the water-soluble polymer. The kneading energy is more preferably 80 Wh/kg or larger, further preferably 100 Wh/kg or larger, still further preferably 200 Wh/kg or larger, even further preferably 300 Wh/kg or larger, particularly preferably 400 Wh/kg or larger. Although higher kneading energy is considered to accelerate the complexation, too high kneading energy industrially requires an excessively large facility and places excessive large burdens on facilities. Therefore, the upper limit of the kneading energy is preferably 1000 Wh/kg.

The degree of complexation is considered to be the rate of binding between the cellulose and other components through a hydrogen bond or a bond based on intermolecular force. As the complexation proceeds, the rate of binding between the cellulose and the water-soluble polymer is elevated, and the effects of the present embodiment are improved.

In the case of drying the kneaded product obtained by the kneading process mentioned above in order to obtain the cellulose complex used in the present embodiment, a drying method known in the art can be used, such as shelf-type drying, spray drying, belt drying, fluidized-bed drying, freeze drying, or microwave drying. In the case of subjecting the kneaded product to the drying process, it is preferred that the kneaded product that maintains the solid content concentration of the kneading process should be subjected to the drying process without the addition of water.

The water content of the cellulose complex thus dried is preferably 1 to 20% by mass. When the water content is 20% or less, problems such as adhesion to containers or decomposition or cost problems associated with shipment or transportation are less likely to arise. The water content of the cellulose complex is more preferably 15% or less, particularly preferably 10% or less. When the water content of the cellulose complex is 1% or more, dispersibility is prevented from being deteriorated due to excessive drying. The water content of the cellulose complex is more preferably 1.5% or more.

In the case of distributing the cellulose complex to the market, it is preferred to prepare the cellulose complex obtained by drying into a powder by pulverization treatment because the powder is easily handled as its shape. However, when spray drying is used as the drying method, drying and powderization can be performed at the same time. In this case, the pulverization is unnecessary. In the case of pulverizing the dried cellulose complex, a method known in the art can be used, such as a cutter mill, a hammer mill, a pin mill, or a jet mill. The pulverization is performed to the extent that all the particles of the powder obtained by the pulverization treatment pass through a sieve having an opening of 1 mm. More preferably, the pulverization is performed such that all the particles of the powder pass through a sieve having an opening of 425 $\mu$m and have an average particle size (weight-average particle size) of 10 to 250 $\mu$m. Such a dry powder is a secondary agglomerate formed by the agglomeration of the fine particles of the cellulose complex. This secondary agglomerate collapses by stirring in water and is thereby dispersed as the fine particles of the cellulose complex mentioned above. The apparent weight-average particle size of the secondary agglomerate refers to a particle size at 50% based on cumulative weight in a particle size distribution obtained by sifting 10 g of a sample for 10 minutes using a Ro-Tap sieve shaker (Sieve Shaker Type A manufactured by Heiko Seisakusho Ltd.) and a JIS standard sieve (Z8801-1987).

<Degree of complexation of water-soluble polymer>

A higher degree of complexation of the cellulose complex used in the present embodiment is more preferred because the cellulose complex is more effective when used in ceramics. This degree of complexation can be measured by a method given below.

<Binding ratio of water-soluble polymer>

In the cellulose complex used in the present embodiment, the binding ratio of the water-soluble polymer is preferably 50% by mass or more. The binding ratio of the water-soluble polymer refers to the proportion of a water-soluble polymer strongly bound without being liberated from cellulose if the cellulose complex is dispersed in water under predetermined conditions, based on the total amount of water-soluble polymers contained in the cellulose complex. A higher value of this proportion means a higher degree of complexation. This binding ratio can be measured by the following method.

First, the cellulose complex is added at a concentration of 0.5% by mass to ion-exchange water and subsequently dispersed in a high-shear homogenizer (manufactured by Nippon Seiki Co., Ltd., trade name "Excel Auto Homogenizer ED-7", treatment conditions: the number of revolutions of 15,000 rpm $\times$ 5 minutes) to obtain a suspension. This suspension is applied in an amount of 200 $\mu$L to a membrane filter having an opening of 0.1 $\mu$m (manufactured by Merck Millipore, trade name Ultrafree Durapore Centrifugal Filters PVDF 0.1 $\mu$m), followed by centrifugation at 116000 m$^2$/s for 45 minutes using a commercially available centrifuge. The water-soluble polymer contained in the obtained filtrate is quantified by gel permeation chromatography or an absolute dry method to measure the concentration in the filtrate. The binding ratio of the water-soluble polymer is calculated according to the following expression:

```
Binding ratio (%) = (Concentration (% by mass) of the
water-soluble polymer contained in the suspension -
Concentration (% by mass) of the water-soluble polymer
contained in the filtrate) / (Concentration (% by mass)
of the water-soluble polymer contained in the suspension)
x 100.
```

A higher value of this binding ratio is preferred. The binding ratio is more preferably 60% or more, further preferably 70% or more, particularly preferably 80% or more, most preferably 90% or more. The upper limit is 100% or less in terms of a theoretical value.

<Viscosity ratio>

When the viscosity of a water dispersion containing 1.0% by mass of the cellulose complex used in the present embodiment is measured at 25°C and 60°C, the viscosity ratio therebetween (viscosity at 60°C/viscosity at 25°C) is preferably 0.70 or more. This viscosity ratio also represents the degree of complexation of the water-soluble polymer in the cellulose complex. A higher value of this viscosity ratio means a higher degree of complexation and therefore means smaller reduction in viscosity caused by temperature.

In this context, the viscosity ratio can be measured by the following method; first, the cellulose complex is diluted into a concentration of 1.0% by mass with ion-exchange water, and a dispersion is prepared in a high-shear homogenizer (manufactured by Nippon Seiki Co., Ltd., trade name "Excel Auto Homogenizer ED-7", treatment conditions: the number of revolutions of 15,000 rpm × 5 minutes). Then, the dispersion is left standing at 60°C or 25°C for 3 hours, loaded in a type B viscometer (the number of rotor revolutions: 60 rpm), left standing for 30 seconds, and then rotated for 30 seconds, followed by viscosity measurement. Here, the rotor can be appropriately changed according to the viscosity of the dispersion. As a guideline, BL type is used when the viscosity is 1 to 20 mPa·s, No. 1 rotor is used when the viscosity is 21 to 100 mPa·s, No. 2 rotor is used when the viscosity is 101 to 300 mPa·s, and No. 3 is used when the viscosity is 301 mPa·s or higher. The viscosity ratio therebetween is determined from each obtained viscosity value according to the following expression: Viscosity ratio = (Viscosity value (mPa·s) at 60°C / Viscosity value (mPa·s) at 25°C). A higher viscosity ratio is preferred. The viscosity ratio is more preferably 0.75 or more, further preferably 0.80 or more, particularly preferably 0.90 or more. When the whole amount of the water-soluble polymer added is complexed in a favorable state, this viscosity ratio is 1.0 or more and is therefore preferred. The upper limit of this viscosity is not particularly set and is usually 10 or less.

<Colloidal cellulose complex content>

The cellulose complex used in the present embodiment preferably contains 30% by mass or more of a colloidal cellulose complex. In this context, the colloidal cellulose complex content refers to the proportion of the mass of a solid content in a supernatant recovered by centrifuging a suspension of the cellulose complex, based on the mass of a solid content in a dispersion before the centrifugation.

Specifically, the cellulose complex is prepared into a pure water suspension having a concentration of 0.5% by mass. The pure water suspension is dispersed in a high-shear homogenizer (manufactured by Nippon Seiki Co., Ltd., trade name "Excel Auto Homogenizer ED-7", treatment conditions: the number of revolutions of 15,000 rpm × 5 minutes) and centrifuged. The centrifugation is performed using a centrifuge (manufactured by Kubota Corp., trade name "Centrifuge 6800", rotor type: RA-400) under treatment conditions: a centrifugal force of 39200 $m^2$/s × 10 minutes. The supernatant is collected, and this supernatant is further centrifuged at 116000 $m^2$/s for 45 minutes. The proportion of the mass of a solid content in the supernatant obtained by this centrifugation operation based on the mass of a solid content in the dispersion before the centrifugation is used as the colloidal cellulose complex content. The solid content includes the cellulose and the water-soluble polymer and may further include the hydrophilic substance.

When the content of the colloidal cellulose complex is 30% by mass or more, suspension stability is improved. The content of the colloidal cellulose complex is preferably 50% by mass or more, more preferably 70% by mass or more. A larger colloidal cellulose complex content means a higher viscosity ratio. Therefore, the upper limit thereof is not particularly limited and is preferably in the range of 100% by mass or less.

<Spread of water-soluble polymer from cellulose>

A feature of the cellulose complex used in the present embodiment is large spread of the water-soluble polymer radiated from cellulose particle surface. Particularly, in the case of using a polysaccharide as the water-soluble polymer, this spread is large. This spread of the water-soluble polymer is indicated by a median size measured by a dynamic light scattering method in the colloidal cellulose complex mentioned above. For the cellulose complex used in the present embodiment, this median size is preferably 0.30 μm or larger. This median size based on the dynamic light scattering method can be measured by the following method: first, the cellulose complex is prepared into a pure water suspension having a concentration of 0.5% by mass. The pure water suspension is dispersed in a high-shear homogenizer (manufactured by Nippon Seiki Co., Ltd., trade name "Excel Auto Homogenizer ED-7", treatment conditions: the number of revolutions of 15,000 rpm × 5 minutes) and centrifuged [a supernatant is collected by centrifugation using a centrifuge (manufactured by Kubota Corp., trade name "Centrifuge 6800", rotor type: RA-400, treatment conditions: a centrifugal force of 39200 $m^2$/s × 10 minutes), and this supernatant is further centrifuged at 116000 $m^2$/s for 45 minutes]. The supernatant thus centrifuged is collected.

This supernatant is placed in a PP sample tube (capacity: 50 mL) and ultrasonicated for 10 minutes using an ultrasonic cleaner (ultrasonic cleaner manufactured by AS ONE Corp., trade name AUC-1L). Then, a particle size distribution (frequency distribution of scattering intensity based on a particle size value) is measured using a zeta potential-particle size measurement system (manufactured by Otsuka Electronics Co., Ltd., trade name "ELSZ-2" (batch cell)). In this context, the median size refers to a particle size value (μm) corresponding to cumulative 50% scattering intensity in this frequency distribution. A larger value of this median size means better suspension stability of the cellulose complex. Therefore, the median size is preferably 0.50 μm or larger, more preferably 0.70 μm or larger, further preferably 0.90 μm or larger, particularly preferably 1.0 μm or larger. The upper limit of this median size is not particularly limited and is preferably 5.0 μm or smaller, more preferably 3.0 μm or smaller, further preferably 2.0 μm or smaller, particularly preferably 1.5 μm or smaller.

<Particle size of cellulose core in cellulose complex>

For the colloidal cellulose complex in the cellulose complex used in the present embodiment, the median size measured by a laser diffraction/scattering method is preferably 1.0 $\mu$m or smaller. Unlike the median size based on the dynamic light scattering mentioned above, the median size measured by this method represents the particle size of a cellulose core present at the center of the cellulose complex. This median size based on the laser diffraction/scattering method can be measured by the following method: first, the cellulose complex is prepared into a pure water suspension having a concentration of 0.5% by mass. The pure water suspension is dispersed in a high-shear homogenizer (manufactured by Nippon Seiki Co., Ltd., trade name "Excel Auto Homogenizer ED-7", treatment conditions: the number of revolutions of 15,000 rpm $\times$ 5 minutes) and centrifuged [a supernatant is collected by centrifugation using a centrifuge (manufactured by Kubota Corp., trade name "Centrifuge 6800", rotor type: RA-400, treatment conditions: a centrifugal force of 39200 m$^2$/s $\times$ 10 minutes), and this supernatant is further centrifuged at 116000 m$^2$/s for 45 minutes]. The supernatant thus centrifuged is collected. A cumulative 50% particle size (volume-average particle size) in the volume frequency particle size distribution of this supernatant obtained using a laser diffraction/scattering particle size distribution analyzer (manufactured by HORIBA, Ltd., trade name "LA-910", ultrasonication: 1 minute, refractive index: 1.20) is used as the particle size of the cellulose core. A smaller value of this particle size is preferred because the shape retainability and plasticity of green body are enhanced when the cellulose complex is used in a ceramic mixture. The median size measured by this method is more preferably 0.7 $\mu$m or smaller, further preferably 0.5 $\mu$m or smaller, particularly preferably 0.3 $\mu$m or smaller, exceedingly preferably 0.2 $\mu$m or smaller.

<Size of coarse particle in cellulose complex>

A feature of the cellulose complex used in the present embodiment is a small median size of coarse particles contained therein. The size of the coarse particles can be measured by the following method: first, the cellulose complex is prepared into a pure water suspension having a concentration of 0.5% by mass. The pure water suspension is dispersed in a high-shear homogenizer (manufactured by Nippon Seiki Co., Ltd., trade name "Excel Auto Homogenizer ED-7", treatment conditions: the number of revolutions of 15,000 rpm $\times$ 5 minutes). A cumulative 50% particle size (volume-average particle size) in the volume frequency particle size distribution obtained, without centrifugation, using a laser diffraction/scattering particle size distribution analyzer (manufactured by HORIBA, Ltd., trade name "LA-910", ultrasonication: 1 minute, refractive index: 1.20). in the obtained volume frequency particle size distribution is used as the size of coarse particles. This median size of 20 $\mu$m or smaller is preferred because the smoothness of the molded article surface is improved when green body blended with the cellulose complex is extruded. Furthermore, food containing the cellulose complex which is smooth in texture without roughness upon eating can be provided. This median size is more preferably 15 $\mu$m or smaller, particularly preferably 10 $\mu$m or smaller, further preferably 8 $\mu$m or smaller. The lower limit of this median size is not particularly limited and is preferably in the range of 0.1 $\mu$m or larger.

<Storage elastic modulus of cellulose complex>

Next, the storage elastic modulus (G') of the cellulose complex used in the present embodiment will be described.
The cellulose complex used in the present embodiment has a storage elastic modulus (G') of 0.30 Pa or higher in a water dispersion of pH 6 to 7 containing 1% by mass of the cellulose complex. The storage elastic modulus represents the rheological elasticity of the water dispersion and represents the degree of the complexation between the cellulose and the water-soluble polymer. A higher storage elastic modulus means that the complexation between the cellulose and the water-soluble polymer is accelerated, and the network structure in the water dispersion of the cellulose complex is more rigid. A more rigid network structure is more preferred because the hardness and shape retainability of ceramic green body are enhanced, and in the case of equivalent shape retainability, the electric power of extrusion is reduced by the exertion of thixotropy.
In the present embodiment, the storage elastic modulus was defined as a value obtained by the dynamic viscoelasticity measurement of a water dispersion (pH 6 to 7) containing the cellulose complex dispersed in pure water. An elastic component that retains stress accumulated in the inside of the cellulose complex network structure when strain is applied to the water dispersion is indicated by the storage elastic modulus.
In a method for measuring the storage elastic modulus, first, the cellulose complex is dispersed in pure water using a high-shear homogenizer (manufactured by Nippon Seiki Co., Ltd., trade name "Excel Auto Homogenizer ED-7", treatment conditions: the number of revolutions of 15,000 rpm $\times$ 5 minutes) to prepare a pure water dispersion having a concentration of 1.0% by mass. The obtained water dispersion is left standing at room temperature for 3 days. The strain dependence of stress of this water dispersion is measured by sweeping at a constant temperature of 25.0°C at an angular velocity of 20 rad/sec in the strain range of 1 → 794% using a viscoelastometer (ARES100FRTN1 manufactured by Rheometric Scientific, Inc., geometry: Double Wall Couette type). For the measurement, the water dispersion is gradually added to the apparatus using a dropper so as not to destroy the fine structure, and left standing for 5 minutes. Then, the measurement is started on the Dynamic Strain mode.

The storage elastic modulus according to the present embodiment refers to a value at the strain of 20% on the strain-stress curve obtained in the measurement mentioned above. A larger value of this storage elastic modulus means that the structure of the water dispersion formed by the cellulose complex is more elastic, and the cellulose and the water-soluble polymer are highly complexed.

The storage elastic modulus of the cellulose complex is preferably 0.50 Pa or higher, more preferably 0.7 Pa or higher, further preferably 0.9 Pa or higher, particularly preferably 1.1 Pa or higher, exceedingly preferably 1.5 Pa or higher. The upper limit of the storage elastic modulus of the cellulose complex is not particularly set and is preferably 10 Pa or lower in light of the realistic extrudability of green body.

<Structure of cellulose complex>

A feature of the cellulose complex used in the present embodiment is large spread of the water-soluble polymer radiated from cellulose surface, which is not seen in cellulose alone. In the case of using a polysaccharide as the water-soluble polymer, the spread is large. Larger spread of the water-soluble polymer from cellulose surface facilitates intertwining the water-soluble polymers of adjacent cellulose complexes. As a result, the dense intertwinement between the cellulose complexes renders the network structure rigid and improves the storage elastic modulus (G'). This spread of the water-soluble polymer can be measured by the following method.

First, the cellulose complex is dispersed in pure water using a high-shear homogenizer (manufactured by Nippon Seiki Co., Ltd., trade name "Excel Auto Homogenizer ED-7", treatment conditions: the number of revolutions of 15,000 rpm $\times$ 5 minutes, total amount: 300 g) to prepare a pure water dispersion having a concentration of 1.0% by mass. The obtained water dispersion is left standing at room temperature for 3 days or longer. Then, the water dispersion is diluted 20-fold with pure water to prepare a sample solution. A 5 $\mu$L aliquot is gradually sucked out of the sample solution using a dropper so as not to destroy the fine structure of the water dispersion, and gradually added dropwise onto a 1 cm x 1 cm cleavaged mica surface. Redundant water is blown off with an air duster, and the sample fixed on the mica is observed under AFM (scanning probe microscope SPM-9700 manufactured by Shimadzu Corp., phase mode, a probe OMCL-AC240TS manufactured by Olympus Corp. is used). In this observed image, cellulose particles are observed as rod-like particles of 2 nm or larger in height, and the water-soluble polymer of smaller than 2 nm in height radiated out from the cellulose particles can be observed. In the present embodiment, this spread of the water-soluble polymer radiated out from the cellulose particles is indicated by a median size measured by a dynamic light scattering method in the colloidal cellulose complex described above.

Higher complexation of the water-soluble polymer is preferred because this spread is larger. In the case of using a polysaccharide as the water-soluble polymer, the spread is large.

<Ceramic>

The ceramic refers to a calcined form of inorganic matter hardened in the fire. In this context, the ceramic is a generic name for inorganic solid materials such as molded articles, powders, and films of semiconductors (e.g., silicon) or inorganic compounds (e.g., carbide, nitride, boride, and titanium oxide), regardless of being metallic or non-metallic. The raw material of the ceramic (ceramic raw material) produced in the present embodiment refers to a material that is often in a powder form and is less likely to be molded without calcination.

<Method for producing ceramic green body molded article>

The method for producing a ceramic green body molded article according to the present embodiment comprises a raw material blending step and a molding step. The ceramic green body molded article is further subjected to a drying and preliminary calcination step (also referred to as a degreasing step) and a calcination step to obtain a ceramic molded article. In addition, a finish processing step and the like are optionally included.

The raw material blending step (including kneading) may be performed by a dry process or a wet process. Particularly, in the case of a wet process, an aqueous system or an organic solvent system may be used. These methods may be used in combination. If necessary, a binder, a plasticizer, a dispersant, a lubricant, a wetting agent, and an antifoaming agent may be used.

Next, the molding step refers to the step of arranging a shape before hardening raw materials in the fire (calcination). Various molding methods can be used differently according to the purpose of completed products. For example, a method known in the art can be used, such as dry pressing, uniaxial pressing (metallic molding), CIP (cold isostatic pressing), HP (hot pressing), HIP (hot isostatic pressing), plastic shaping, throwing, extrusion, injection molding, casting, slip casting, pressure casting, rotational casting, tape casting, or a doctor blade method. These methods may each be used alone or may be used in combination of two or more thereof.

Particularly, a method of blending raw materials by a wet process in an aqueous system, followed by extrusion is preferred for preparing a honeycomb ceramic as a catalyst support for automobile exhaust gases. This method easily produces a homogeneous and highly strong honeycomb and is excellent in mass productivity. This process is summarized as follows: first, a ceramic raw material is subjected to pulverization and particle size control, and blended so as to attain predetermined chemical composition. Water and additives such as a binder are added thereto, and the mixture is kneaded to prepare green body, which is then placed in an extruder and extruded through a die. The product thus extruded into a honeycomb form can be dried (degreased) and calcined to obtain a honeycomb ceramic. The most important thing for the process of producing a honeycomb by extrusion is the structure of an extrusion die. Here, the green body (kneaded product) enters the die from a feed port on the underside of the die, at some midpoint enters a slit forming a honeycomb structure on the outlet side, and spreads crosswise so that adjacent green bodys are compressed and combined to form an integral honeycomb structure.

In the production method by wet extrusion in an aqueous system as described above, the cellulose complex is blended with the ceramic powder in order to obtain green body in the raw material blending step. As a result, hard (high-green strength) green body excellent in shape retainability can be obtained, and the plasticity of the green body can be maintained even under conditions where the amount of water added is decreased. Therefore, the resulting molded article is free from cracks at the time of extrusion involving complicated fine processing as required by honeycombs, and has high dimensional accuracy.

<Film thickness of thin ceramic film>

The method for producing a ceramic molded article according to the present embodiment is particularly suitably used in the production of a ceramic molded article having a thin-film structure in a portion of its structure, such as a honeycomb ceramic. In general, a honeycomb ceramic having a larger number of cells per unit cross section is preferred because of having higher performance as a catalyst. However, such a larger number of cells results in a smaller film thickness. Therefore, the honeycomb ceramic tends to be broken due to thermal shrinkage at the time of molding, drying, or calcination in the production process. As the film thickness is decreased, the passage width of an extrusion mold is also narrowed. Thus, the extrusion of green body having high green strength elevates extrusion pressure and requires large electric power. Therefore, productivity is impaired. Accordingly, use of the production method of the present embodiment permits thin film formation at low pressure and small electric power without impairing productivity, as compared with conventional production methods.

The film thickness of the thin-film structure in at least a portion of the structure of the ceramic molded article is preferably 6 mils (1 mil: 1/1000 inches) or smaller, more preferably 5 mils or smaller, further preferably 4 mils or smaller, particularly preferably 3 mils or smaller, most preferably 2 mils or smaller. A smaller film thickness can increase the number of cells. Therefore, the lower limit is not particularly set and is preferably 1 mil or larger from the viewpoint of productivity.

<Ceramic powder>

Examples of the ceramic raw material used in the present embodiment include, but are not particularly limited to, green body such as cordierite, mullite, and bentonite, talc, zircon, zirconia, spinel, alumina, kaolin and their precursors, carbide (e.g., silicon carbide), nitride (e.g., silicon nitride), silicate, aluminate, lithium aluminosilicate, alumina-silica, titania, aluminum titanate, molten silica, boride, soda lime, aluminosilicate, borosilicate, and sodium barium silicate. These ceramic raw materials may each be used alone or may be used in combination of two or more thereof as long as the molded article of interest is obtained.

Among those described above, cordierite is particularly preferred as the ceramic raw material for use in the production of a honeycomb ceramic as a catalyst support for automobile exhaust gases. Naturally occurring cordierite may be used, and cordierite talc ($3MgO \cdot 4SiO_2 \cdot H_2O$), kaolin ($Al_2O_3 \cdot 2SiO_2 \cdot 2H_2O$), or alumina ($Al_2O_3$) is preferred. A blend of these raw materials to attain cordierite composition ($2MgO \cdot 2Al_2O_3 \cdot 5SiO_2$) may be used.

The amount of the aforementioned ceramic powder added is preferably 50 to 100% by mass, more preferably 60 to 95% by mass, particularly preferably 75 to 85% by mass, based on 100% by mass in total of ceramic materials and optionally added inorganic materials from the viewpoint of the heat resistance of the molded article.

<Binder>

In the method for producing a ceramic green body molded article according to the present embodiment, a binder may be added, if necessary, in addition to the cellulose complex. The binder type is not particularly limited. Examples of an aqueous binder that can be used include: cellulosic compounds such as methylcellulose, hydroxypropylmethylcellulose, carboxymethylcellulose, hydroxyethylcellulose, and their salts; starch compounds such as starch and processed starch; and synthetic polymer compounds such as polyvinyl alcohol, polyethylene oxide, sodium polyacrylate, and polyacrylamide.

Examples of a thermoplastic binder that can be used include polyethylene, ethylene-vinyl acetate copolymers (EVA), polypropylene, polystyrene, acrylic resins, and polyamide resins. The binders mentioned above may each be used alone or may be used in combination of two or more thereof.

Particularly, cellulosic compounds such as methylcellulose, hydroxypropylmethylcellulose, carboxymethylcellulose, hydroxyethylcellulose, and their salts are preferably used for preparing a honeycomb ceramic as a catalyst support for automobile exhaust gases. More preferably, methylcellulose and/or hydroxypropylmethylcellulose are used because shape retainability and dimensional stability at the time of calcination are enhanced.

<Plasticizer>

In the present embodiment, a plasticizer may be used, if necessary. Typically, for example, a glycol compound, a phthalic compound, glycerin, polyethylene glycol, or dibutyl phthalate can be suitably used. These plasticizers may each be used alone or may be used in combination of two or more thereof.

<Dispersant>

In the present embodiment, an aqueous or nonaqueous dispersant can also be used. Examples of the aqueous dispersant include carboxymethylcellulose ammonium, oligomers of acrylic acid or its ammonium salt, anionic surfactants, ammonium polycarboxylate, wax emulsions, various amines such as monoethylamine, pyridine, piperidine, and tetramethylammonium hydroxide. Examples of the nonaqueous dispersant include fatty acids, phosphoric acid esters, synthetic surfactants, and benzenesulfonic acid. These dispersants may each be used alone or may be used in combination of two or more thereof.

<Wetting agent>

In the present embodiment, a nonionic surfactant, an alcohol, a glycol, or the like can also be used as a wetting agent. These wetting agents may each be used alone or may be used in combination of two or more thereof.

<Antifoaming agent>

In the present embodiment, a nonionic surfactant, a polyalkylene derivative, or a polyether derivative can also be used as an antifoaming agent. These antifoaming agents may each be used alone or may be used in combination of two or more thereof.

<Amount of cellulose complex blended>

In the present embodiment, the amount of the cellulose complex added for blending is 0.1 to 20 parts by mass of the cellulose complex based on 100 parts by mass of the ceramic raw material mentioned above. The cellulose complex is subjected to kneading in the raw material blending step mentioned above so that the particles are rendered fine to form homogeneous green body containing water. In the green body, the particles of the cellulose complex surround the ceramic particles so that the particles interact with each other to form a network, which thereby imparts moderate hardness (green strength), shape retainability, and thixotropy to the green body. In this context, the thixotropy refers to the property of causing irreversible transition of gel to sol under weak shear applied to green body. The green body provided with this thixotropy is effective for being capable of reducing the electric power of extrusion by the application of shear upon extrusion in an apparatus, even if having the same green strength. When the amount of the cellulose complex added is small, the effect mentioned above is small. When the amount of the cellulose complex added is too large, the green body is so hard that plasticity is impaired. Therefore, it is preferred to set the amount of the cellulose complex added to within a proper range. The range of the amount of the cellulose complex added is more preferably 0.5 parts by mass to 10 parts by mass, further preferably 1 part by mass to 8 parts by mass, particularly preferably 2 parts by mass to 6 parts by mass, exceedingly preferably 3 parts by mass to 5 parts by mass, based on 100 parts by mass of the ceramic raw material.

<Method for adding cellulose complex>

Examples of the method for adding the cellulose complex used in the present embodiment to the ceramic raw material include methods given below. For example, any of a method of adding the ceramic raw material powder, the cellulose complex, and other optional additives at the same time and mixing them in one portion, a method of mixing the ceramic raw material powder with other additives in advance, followed by the addition and mixing of the cellulose complex powder, and a method of mixing other additives with the cellulose complex in advance, followed by the addition and mixing of the ceramic raw material powder may be used as a dry method. Alternatively, a wet method can adopt, for example, a method of adding water to a mixture of the ceramic raw material powder, the cellulose complex, and other optional additives, a method of adding water to the ceramic raw material powder in advance, followed by the addition and mixing of other additives and the cellulose powder, or a method of dispersing other additives and the cellulose powder in water in advance and then adding the ceramic raw material powder thereto with mixing.

Particularly, a method of mixing the ceramic raw material powder, the cellulose complex, and other optional additives by a dry process, and mixing and kneading them while adding water thereto, or a method of mixing and kneading a mixture of the ceramic raw material powder and other optional additives with the cellulose complex dispersed in water in advance is preferably adopted because the cellulose complex and other components can be uniformly dispersed in the resulting green body.

<Amount of water added>

In the method for producing a ceramic green body molded article according to the present embodiment, the amount of water blended as a dispersion medium is preferably adjusted such that the green body obtains plasticity appropriate for extrusion. For example, for forming appropriate green body, the amount of water added is preferably 10 to 60% by mass, more preferably 15 to 50% by mass, particularly preferably 15 to 40% by mass, based on the total mass of the green body. When the amount of water added is small, the green body is so hard that defects such as cracks occur easily at the time of extrusion. When the amount of water added is too large, the green body is so loose that shape retainability is impaired.

<Preparation of green body (kneading)>

The method for preparing the kneaded product (green body) in the raw material blending step of the present embodiment is not particularly limited, and a method known in the art can be used. Examples thereof can include methods such as premixing. The method for forming green body by kneading the mixture thus obtained is not particularly limited, and a method known in the art can be used. For example, a kneader, an extruder, a planetary mixer, a grinding mixer, or a vacuum pug-mill can be used, and a continuous type or a batch type may be used. These methods may each be performed alone, or two or more of these methods may be used in combination.

<Molding step>

Subsequently, the obtained green body is subjected to the molding step. Typical examples of the molding approach include extrusion. Preferably, the obtained green body is extruded using a die having the desired cell shape, rib thickness, cell density, etc. to prepare a molded article. For example, a honeycomb molded article is obtained through a die having a honeycomb shape.

<<Method for producing ceramic molded article>>

The ceramic molded article of the present embodiment can be obtained by subjecting the ceramic green body molded article obtained by the steps mentioned above to a drying and preliminary calcination step, followed by further calcination.

<Drying and preliminary calcination step (degreasing)>

Preliminary calcination is preferably performed for the purpose of partially or completely removing organic matter (water-soluble binder, pore-forming material, etc.) in the ceramic green body molded article by combustion.
In general, the combustion temperature of a binder (organic binder) is on the order of 100 to 300°C, and the combustion temperature of a pore-forming material is on the order of 200 to 800°C. Therefore, the preliminary calcination temperature can be on the order of 200 to 1000°C. The preliminary calcination time is not particularly limited and is usually on the order of 10 to 100 hours.
A method known in the art such as hot air drying, microwave drying, dielectric drying, drying under reduced pressure, vacuum drying, or freeze drying can be used as the drying method. Among others, a method using hot air drying and microwave drying or dielectric drying in combination is preferred because the whole molded article can be dried and preliminarily calcined rapidly and uniformly.

<Calcination>

Next, the preliminarily calcined molded article is calcined to prepare a ceramic molded article (calcined ceramic). This calcination can calcine and densify the ceramic raw material in the preliminarily calcined molded article and secure predetermined strength. For example, calcination conditions (temperature and time) for cordierite used as the raw material preferably involve a calcination temperature on the order of 1350 to 1440°C and a calcination time on the order of 3 to 10 hours. The preliminary calcination and the calcination may be separately carried out or may be continuously carried out. The latter approach is preferred from the viewpoint of reduction of operations and energy efficiency.

<Surface smoothness of ceramic>

Smoother surface of the ceramic molded article obtained through the steps described above is more preferred because strain is less likely to occur upon assembly, and the ceramic molded article can uniformly coat catalyst particles when supporting the particles after calcination. This surface smoothness can be indicated by a BET specific surface area and a pore volume based on a nitrogen adsorption method. The BET specific surface area and the pore volume can be measured by, for example, the following method: the BET specific surface area and the pore volume can be measured by the BET method using a specific surface area/pore distribution measurement apparatus (manufactured by Micromeritics Instrument Corp., trade name TriSTAR) and nitrogen as an adsorption gas. Each ceramic sample is cut into the largest diameter of 10 mm or smaller with a diamond cutter or the like so as not to cause strain or strain in the shape. Approximately 1 g thereof is added to a cell and measured. Each sample used in the measurement is a form dried in advance under reduced pressure at 110°C for 3 hours.

In the ceramic molded article, the BET specific surface area measured by the nitrogen adsorption method is preferably less than $0.010\ m^2/g$, more preferably $0.009\ m^2/g$ or less, further preferably $0.008\ m^2/g$ or less, particularly preferably $0.007\ m^2/g$ or less, most preferably $0.006\ m^2/g$ or less. A smaller value of this BET specific surface area is preferred because the surface is smoother. Although the lower limit is not particularly set, $0.001\ m^2/g$ or more suffices.

In the ceramic molded article, the pore volume obtained by the method described above is preferably less than $0.60\ m^3/g$, more preferably $0.50\ m^3/g$ or less, further preferably $0.40\ m^3/g$ or less, particularly preferably $0.30\ m^3/g$ or less, most preferably $0.20\ m^3/g$ or less. A smaller value of this pore volume is preferred because the surface is smoother. Although the lower limit is not particularly set, $0.05\ m^3/g$ or more suffices.

It is preferred that the ceramic molded article should satisfy at least the BET specific surface area of less than $0.010\ m^2/g$ or the pore volume of less than $0.60\ m^3/g$ measured by the nitrogen adsorption method, because strain is less likely to occur upon assembly of the molded article.

Examples

The present embodiment will be described with reference to Examples given below. However, these examples are not intended to limit the scope of the present embodiment.

<Average degree of polymerization of cellulose>

The average degree of polymerization of cellulose was measured by the reduced specific viscosity method using a copper ethylenediamine solution as specified by Confirmatory Test for Crystalline Cellulose (3) in "Japanese Pharmacopoeia, 14th Edition" (published by Hirokawa-Shoten Ltd.).

<Crystallinity of cellulose>

A diffraction pattern was measured (normal temperature) by the powder method using an X-ray diffractometer (multipurpose X-ray diffractometer manufactured by Rigaku Corp.), and the crystallinity of cellulose was calculated by the Segal method.

<L/D of cellulose particle>

A cellulose complex or a mixture of cellulose and a water-soluble polymer was prepared into a pure water suspension having a concentration of 1% by mass and dispersed in a high-shear homogenizer (manufactured by Nippon Seiki Co., Ltd., trade name "Excel Auto Homogenizer ED-7", treatment conditions: the number of revolutions of 15,000 rpm $\times$ 5 minutes) to obtain a water dispersion. The water dispersion was diluted into 0.1 to 0.5% by mass with pure water, casted onto mica, and dried in air. The resultant was measured under an atomic force microscope (scanning probe microscope SPM-9700 manufactured by Shimadzu Corp., phase mode, a probe OMCL-AC240TS manufactured by Olympus Corp. was used). The major axes (L) and minor axes (D) of arbitrarily selected 100 to 150 particles in the particle images obtained by the measurement were measured, and an average ratio therebetween (L/D) was used as L/D of cellulose particles.

<Number-average molecular weights of water-soluble polymer and hydrophilic substance>

A water-soluble polymer or a hydrophilic substance used in each of Examples and Comparative Examples was dissolved at a concentration of 0.025 to 0.1% by mass in a 0.05 mol/L aqueous sodium hydroxide solution to prepare a sample solution. Next, each sample solution was injected in an amount of 20 $\mu$L or smaller to high-performance liquid chromatography to determine a number-average molecular weight. In a high-performance liquid chromatography (HPLC) apparatus under a trade name of LC-20A manufactured by Shimadzu Corp., one column under a trade name of TSK-GEL G5000PW manufactured by Tosoh Corp. (7.8 mm x 30 cm) and two columns under a trade name of TSK-GEL G3000PWXL (7.8 mm x 30 cm) were connected in series, and a 0.05 mol/L aqueous sodium hydroxide solution was used as a mobile phase. The number-average molecular weight was determined from a chromatogram obtained by measurement at a mobile phase flow rate of 1 mL/min at a column temperature of 30°C using a RI detector or a UV detector (wavelength: 210 nm). Here, a value based on pullulan standards was used.

<Binding ratio of water-soluble polymer>

A cellulose complex or a mixture of cellulose and a water-soluble polymer was added at a concentration of 0.5% by mass to ion-exchange water and subsequently dispersed in a high-shear homogenizer (manufactured by Nippon Seiki Co., Ltd., trade name "Excel Auto Homogenizer ED-7", treatment conditions: the number of revolutions of 15,000 rpm $\times$ 5 minutes) to obtain a suspension. This suspension was applied in an amount of 200 $\mu$L to a membrane filter having an opening of 0.1 $\mu$m (manufactured by Merck Millipore, trade name Ultrafree Durapore Centrifugal Filters PVDF 0.1 $\mu$m), followed by centrifugation at 116000 m$^2$/s for 45 minutes using a commercially available centrifuge. The water-soluble polymer contained in the obtained filtrate was quantified by gel permeation chromatography. On the basis of the quantification value, the binding ratio of the water-soluble polymer in the cellulose complex or the mixture was calculated according to the following expression:

```
Binding ratio (%) = (Concentration (% by mass) of the

water-soluble polymer contained in the suspension -

Concentration (% by mass) of the water-soluble polymer contained in the filtrate) / (Concentration (% by mass)

of the water-soluble polymer contained in the suspension)

× 100
```

<Viscosity ratio>

A cellulose complex or a mixture of cellulose and a water-soluble polymer was diluted into a concentration of 1.0% by mass with ion-exchange water, and a dispersion was prepared in a high-shear homogenizer (manufactured by Nippon Seiki Co., Ltd., trade name "Excel Auto Homogenizer ED-7", treatment conditions: the number of revolutions of 15,000 rpm $\times$ 5 minutes). Then, the dispersion was left standing at 60°C or 25°C for 3 hours, loaded in a type B viscometer (the number of rotor revolutions: 60 rpm), left standing for 30 seconds, and then rotated for 30 seconds, followed by viscosity measurement. Here, the rotor was appropriately changed according to the viscosity of the dispersion. As a guideline, BL type was used when the viscosity was 1 to 20 mPa·s, No. 1 rotor was used when the viscosity was 21 to 100 mPa·s, No. 2 rotor was used when the viscosity was 101 to 300 mPa·s, and No. 3 was used when the viscosity was 301 mPa·s or higher. The viscosity ratio therebetween was determined from each viscosity value obtained by the measurement according to the following expression:

$$\text{Viscosity ratio} = (\text{Viscosity value (mPa·s) at 60°C} /$$

$$\text{Viscosity value (mPa·s) at 25°C})$$

<Colloidal cellulose complex content>

A cellulose complex or a mixture of cellulose and a water-soluble polymer was prepared into a pure water suspension having a concentration of 0.5% by mass. The pure water suspension was dispersed in a high-shear homogenizer (manufactured by Nippon Seiki Co., Ltd., trade name "Excel Auto Homogenizer ED-7", treatment conditions: the number of revolutions of 15,000 rpm × 5 minutes) and centrifuged using a centrifuge (manufactured by Kubota Corp., trade name "Centrifuge 6800", rotor type: RA-400) under treatment conditions: a centrifugal force of 39200 $m^2$/s × 10 minutes. The supernatant was collected, and this supernatant was further centrifuged at 116000 $m^2$/s for 45 minutes. A residual solid content in the supernatant thus centrifuged was measured by the absolute dry method, and the percentage by mass (colloid content) of the colloidal cellulose complex or mixture was calculated.

<Storage elastic modulus of cellulose complex>

A cellulose complex or a mixture of cellulose and a water-soluble polymer was dispersed in pure water using a high-shear homogenizer (manufactured by Nippon Seiki Co., Ltd., trade name "Excel Auto Homogenizer ED-7", treatment conditions: the number of revolutions of 15,000 rpm × 5 minutes) to prepare a pure water dispersion having a concentration of 1.0% by mass. The obtained water dispersion was left standing at room temperature for 3 days. The strain dependence of stress of this water dispersion was measured by sweeping at a constant temperature of 25.0°C at an angular velocity of 20 rad/sec in the strain range of 1 → 794% using a viscoelastometer (ARES100FRTN1 manufactured by Rheometric Scientific, Inc., geometry: Double Wall Couette type). For the measurement, the water dispersion was gradually added to the apparatus using a dropper so as not to destroy the fine structure, and left standing for 5 minutes. Then, the measurement was started on the Dynamic Strain mode. The storage elastic modulus was selected as a value at the strain of 20% on the strain-stress curve obtained in the measurement mentioned above.

<Spread of water-soluble polymer from cellulose (DLS particle size)>

A cellulose complex or a mixture of cellulose and a water-soluble polymer was prepared into a pure water suspension having a concentration of 0.5% by mass. The pure water suspension was dispersed in a high-shear homogenizer (manufactured by Nippon Seiki Co., Ltd., trade name "Excel Auto Homogenizer ED-7", treatment conditions: the number of revolutions of 15,000 rpm × 5 minutes) and centrifuged using a centrifuge (manufactured by Kubota Corp., trade name "Centrifuge 6800", rotor type: RA-400) under treatment conditions: a centrifugal force of 39200 $m^2$/s × 10 minutes. The supernatant was collected, and this supernatant was further centrifuged at 116000 $m^2$/s for 45 minutes. The supernatant thus centrifuged was collected. This supernatant was placed in a PP sample tube (capacity: 50 mL) and ultrasonicated for 10 minutes using an ultrasonic cleaner (ultrasonic cleaner manufactured by AS ONE Corp., trade name AUC-1L). Then, a particle size distribution (frequency distribution of scattering intensity based on a particle size value) was measured using a zeta potential-particle size measurement system (manufactured by Otsuka Electronics Co., Ltd., trade name "ELSZ-2" (batch cell)), and a median size (DLS particle size) was calculated.

<Particle size of cellulose core in cellulose complex>

A cellulose complex or a mixture of cellulose and a water-soluble polymer was prepared into a pure water suspension having a concentration of 0.5% by mass. The pure water suspension was dispersed in a high-shear homogenizer (manufactured by Nippon Seiki Co., Ltd., trade name "Excel Auto Homogenizer ED-7", treatment conditions: the number of revolutions of 15,000 rpm × 5 minutes) and centrifuged using a centrifuge (manufactured by Kubota Corp., trade name "Centrifuge 6800", rotor type: RA-400) under treatment conditions: a centrifugal force of 39200 $m^2$/s × 10 minutes. The supernatant was collected, and this supernatant was further centrifuged at 116000 $m^2$/s for 45 minutes. The supernatant thus centrifuged was collected. The volume frequency particle size distribution of this supernatant was measured using a laser diffraction/scattering particle size distribution analyzer (manufactured by HORIBA, Ltd., trade name "LA-910", ultrasonication: 1 minute, refractive index: 1.20). A cumulative 50% particle size (volume-average particle size) in the obtained volume frequency particle size distribution was measured, and the measurement value was used as the particle size of a cellulose core (core particle size) in the cellulose complex or the mixture.

<Size of coarse particle in cellulose complex>

A cellulose complex or a mixture of cellulose and a water-soluble polymer was prepared into a pure water suspension having a concentration of 0.5% by mass. The pure water suspension was dispersed in a high-shear homogenizer (manufactured by Nippon Seiki Co., Ltd., trade name "Excel Auto Homogenizer ED-7", treatment conditions: the number of revolutions of 15,000 rpm × 5 minutes). The volume frequency particle size distribution of this dispersion was measured, without centrifugation, using a laser diffraction/scattering particle size distribution analyzer (manufactured by HORIBA, Ltd., trade name "LA-910", ultrasonication: 1 minute, refractive index: 1.20). A cumulative 50% particle size (volume-average particle size) in the obtained volume frequency particle size distribution was measured, and the measurement value was used as the size of coarse particles (coarse particle size) in the cellulose complex or the mixture.

<Structural observation of cellulose complex>

A cellulose complex or a mixture of cellulose and a water-soluble polymer was dispersed in pure water using a high-shear homogenizer (manufactured by Nippon Seiki Co., Ltd., trade name "Excel Auto Homogenizer ED-7", treatment conditions: the number of revolutions of 15,000 rpm × 5 minutes, total amount: 300 g) to prepare a pure water dispersion having a concentration of 1.0% by mass. The obtained water dispersion was left standing at room temperature for 3 days or longer. Then, the water dispersion was diluted 20-fold with pure water to prepare a sample solution. A 5 μL aliquot was gradually sucked out of the sample solution using a dropper so as not to destroy the fine structure of the water dispersion, and gradually added dropwise onto a 1 cm x 1 cm cleavaged mica surface. Redundant water was blown off with an air duster, and the sample fixed on the mica was observed under AFM (scanning probe microscope SPM-9700 manufactured by Shimadzu Corp., phase mode, a probe OMCL-AC240TS manufactured by Olympus Corp. was used).

<Hardness of ceramic green body molded article (green strength)>

A ceramic green body molded article obtained in each of Examples and Comparative Examples was charged into a round tubular SUS cylinder of $\phi$40 mm and 60 mm in height, and its hardness (green strength) was measured using a hardness tester (manufactured by NGK Insulators, Ltd., trade name GREEN BODYHARDNESS TESTER). Here, a larger penetration (indicated by mm) means that the ceramic green body molded article is harder and has higher green strength.

<Crack in ceramic green body molded article>

A kneaded product obtained in each of Examples and Comparative Examples was extruded using a single-screw extruder equipped with a die of $\phi$6.5 mm (having one hole at the central portion) (manufactured by Fuji Electric Industry Co., Ltd., apparatus name ECK, the number of screw revolutions: 50 rpm, treatment speed: 90 to 90 g/min). Then, the ceramic green body molded article was cut into a length of 180 mm, and the number of cracks on the surface was visually counted.

<Electric power of extrusion of ceramic green body molded article>

The electric power of extrusion was measured with an electric power meter (1-second intervals) when the kneaded product obtained in each of Examples and Comparative Examples was extruded under the measurement conditions for cracks described above. An average electric power of extrusion for 30 to 120 minutes in 120-hour continuous extrusion was calculated, and the average value was used as the electric power of extrusion of the ceramic green body molded article.

<Surface observation of ceramic green body molded article>

A ceramic green body molded article obtained in each of Examples and Comparative Examples was observed, without vapor deposition treatment, under a scanning electron microscope (SEM, manufactured by JEOL Ltd., trade name JEOL JSM5510-LV).

<Surface observation of ceramic molded article>

A ceramic molded article (calcined form) obtained in each of Examples and Comparative Examples was subjected to platinum deposition treatment and then observed under a scanning electron microscope (SEM, manufactured by JEOL Ltd., trade name JEOL JSM5510-LV).

<Film thickness of ceramic molded article>

A thin film, if any, obtained in each of Examples and Comparative Examples was cut into 5 mm square with a diamond cutter, subjected to platinum deposition treatment, and observed in the film thickness direction under a scanning electron microscope (SEM, manufactured by JEOL Ltd., trade name JEOL JSM5510-LV) to measure a film thickness.

<Specific surface area and pore volume of ceramic molded article>

The BET specific surface area and the pore volume were determined by the BET method using TriSTAR (trade name) manufactured by Micromeritics Instrument Corp. and nitrogen as an adsorption gas. Each ceramic sample was cut into the largest diameter of 5 mm or smaller with a diamond cutter, and approximately 1 g thereof was added to a cell and measured. Each sample used in the measurement was a form dried under reduced pressure at 110°C for 3 hours.

(Example 1)

Commercially available DP pulp (average degree of polymerization: 1600) was chopped and then hydrolyzed at 105°C for 15 minutes in 2.5 mol/L hydrochloric acid, followed by washing with water and filtration to prepare cellulose in a wet cake form having a solid content of 50% by mass (average degree of polymerization: 220, crystallinity: 78%, particle L/D: 1.6). Next, the cellulose in a wet cake form and CMC-Na (viscosity of a 2% solution thereof: 620 mPa-s, degree of substitution: 0.7 to 0.8, number-average molecular weight: 636000 or larger) were added at a cellulose/CMC-Na mass ratio of 90/10 and kneaded at a solid content of 37% by mass at 126 rpm in a planetary mixer (manufactured by Shinagawa Machinery Work Co., Ltd., 5DM-03-R, stirring blade: hook type) to obtain cellulose complex A. The kneading energy (electric power) was controlled by the kneading time of the planetary mixer, and the actual measurement value was 60 Wh/kg. The kneading temperature was adjusted by jacket cooling, and the temperature of the kneaded product was directly measured using a thermocouple and was 20 to 85°C throughout the kneading.

The obtained cellulose complex A had a CMC-Na binding ratio of 81% and viscosity ratio (viscosity at 60°C/viscosity at 25°C) of 0.75. Also, the colloidal cellulose complex content (colloid content) was 70% by mass, the storage elastic modulus (G') was 0.45 Pa, the dynamic light scattering median size (DLS particle size) of the colloidal cellulose complex was 0.81 $\mu$m, the laser diffraction/scattering median size (core particle size) was 0.13 $\mu$m, and the median size of coarse particles (coarse particle size) was 9.5 $\mu$m. As a result of observing the cellulose complex A under AFM, it was confirmed that CMC-Na molecules were bound with the surface of cellulose and radiated.

Next, cordierite (manufactured by Marusu Glaze Co., Ltd., trade name Blended Cordierite AF-31, average particle size: 32.9 $\mu$m) as a raw material powder of a ceramic, hydroxypropylmethylcellulose (hereinafter, also referred to as "HPMC"; manufactured by Shin-Etsu Chemical Co., Ltd., trade name Metolose 60SH-4000, methoxy degree of substitution: 1.9, hydroxypropoxy molar substitution: 0.25, viscosity: 4000 mPa·s (2%)) as a binder, and the cellulose complex A were used, blended at ceramic raw material powder/binder/cellulose complex = 94/3/3 based on their respective solid contents (total amount: 500 g), and mixed for 3 minutes in a plastic bag to form green body. Then, the green body was added to a planetary mixer (manufactured by Shinagawa Machinery Work Co., Ltd., 5DM-03-R, stirring blade: hook type), and ion-exchange water was added in one portion at 32.5% by mass based on the green body. The mixture was kneaded (adjusted a plurality of times) at 100 rpm for 60 seconds after green body formation to obtain a kneaded product. The obtained kneaded product was extruded for 120 minutes using a single-screw extruder equipped with a die of φ6.5 mm (having one hole at the central portion) (manufactured by Fuji Electric Industry Co., Ltd., apparatus name ECK, the number of screw revolutions: 50 rpm, treatment speed: 90 to 90 g/min) to obtain a ceramic green body molded article. The hardness (green strength) of the obtained ceramic green body molded article, the results of observing cracks, and the electric power of extrusion are shown in Table 1.

The obtained ceramic green body molded article was found to have high plasticity because the electric power of extrusion was low. The ceramic green body molded article was also found to be excellent in shape retainability because the green strength was high. The ceramic green body molded article was further found to be finely processed with ease because the green strength was high, the electric power of extrusion was low, and cracks were less likely to occur.

(Example 2)

Cellulose in a wet cake form was obtained by hydrolysis by the same operation as in Example 1, and cellulose complex B was obtained by the same operation as in Example 1 except that: the solid content was set to 45% by mass; the kneading energy was set to 390 Wh/kg; and the kneading temperature was set to 20 to 40°C.

The obtained cellulose complex B had a CMC-Na binding ratio of 93% and a viscosity ratio of 1.7. Also, the colloidal cellulose complex content was 78% by mass, the storage elastic modulus (G') was 5.5 Pa, the dynamic light scattering median size of the colloidal cellulose complex was 2.5 μm, the laser diffraction/scattering median size was 0.13 μm, and the median size of coarse particles was 6.5 μm. As a result of observing the cellulose complex B under AFM, it was confirmed that CMC-Na molecules were bound with the surface of cellulose and radiated. The spread was much larger than that in the cellulose complex A obtained in Example 1.

A ceramic green body molded article was prepared and evaluated in the same way as in Example 1 except that the cellulose complex B was used. The results are shown in Table 1.

(Example 3)

Cellulose in a wet cake form was obtained by hydrolysis by the same operation as in Example 1, and cellulose complex C was obtained by the same operation as in Example 1 except that: the solid content was set to 30% by mass; the kneading energy was set to 50 Wh/kg; and the kneading temperature was set to 20 to 90°C.

The obtained cellulose complex C had a CMC-Na binding ratio of 55% and a viscosity ratio of 0.71. Also, the colloidal cellulose complex content was 68% by mass, the storage elastic modulus (G') was 0.35 Pa, the dynamic light scattering median size of the colloidal cellulose complex was 0.35 μm, the laser diffraction/scattering median size was 0.16 μm, and the median size of coarse particles was 10.3 μm. As a result of observing the cellulose complex C under AFM, it was confirmed that CMC-Na molecules were bound with the surface of cellulose and radiated. The spread was smaller than that in the cellulose complex A obtained in Example 1.

A ceramic green body molded article was prepared and evaluated in the same way as in Example 1 except that the cellulose complex C was used. The results are shown in Table 1.

(Example 4)

A ceramic green body molded article was prepared and evaluated in the same way as in Example 1 except that the cellulose complex A obtained in Example 1 was used and blended with the ceramic such that the blending ratio was set to ceramic raw material powder/binder/cellulose complex = 94/5.5/0.5. The results are shown in Table 1.

(Example 5)

A ceramic green body molded article was prepared and evaluated in the same way as in Example 1 except that the cellulose complex A obtained in Example 1 was used and blended with the ceramic such that the blending ratio was set to ceramic raw material powder/binder/cellulose complex = 87/3/10. The results are shown in Table 1.

(Example 6)

By the same operation as in Example 1, cellulose hydrolysis was performed using commercially available DP pulp chopped to obtain cellulose in a wet cake form (MCC). Component A: CMC-Na (viscosity of a 2% solution thereof: 620 mPa·s, degree of substitution: 0.7 to 0.8, number-average molecular weight: 636000 or larger) and component B: CMC-Na (viscosity of a 2% solution thereof: 25 mPa·s, degree of substitution: 0.7 to 0.8, number-average molecular weight: 636000 or larger) were provided. The cellulose and CMC-Na were blended with xanthan gum (manufactured by Danisco Japan Ltd., trade name Grindsted Xanthan 200, number-average molecular weight: 636000 or larger) and dextrin (manufactured by Sanwa Starch Co., Ltd., trade name Sandec #30, number-average molecular weight: 1600) as a hydrophilic substance. The blend was added at a MCC/CMC-Na (component A + component B)/xanthan gum/dextrin mass ratio of 70/5 (configuration of CMC-Na: component A/component B = 50/50)/5/20, and water was added thereto to adjust the solid content to 45% by mass. Cellulose complex D was obtained by kneading in the same way as in Example 1. The kneading energy was controlled by the kneading time of the planetary mixer, and the actual measurement value was 80 Wh/kg. The kneading temperature was 20 to 65°C.

The obtained cellulose complex D had a water-soluble polymer (including CMC-Na and xanthan gum) binding ratio of 51% and a viscosity ratio of 0.83. Also, the colloidal cellulose complex content was 75% by mass, the storage elastic modulus (G') was 1.2 Pa, the dynamic light scattering median size of the colloidal cellulose complex was 0.95 μm, the laser diffraction/scattering median size was 0.16 μm, and the median size of coarse particles was 8.5 μm. As a result of observing the cellulose complex D under AFM, it was confirmed that the water-soluble polymer was bound with the surface of cellulose and radiated.

A ceramic green body molded article was prepared and evaluated in the same way as in Example 1 except that the cellulose complex D was used. The results are shown in Table 1.

(Example 7)

By the same operation as in Example 1, cellulose hydrolysis was performed using commercially available DP pulp chopped to obtain cellulose in a wet cake form (MCC). Methylcellulose (manufactured by Shin-Etsu Chemical Co., Ltd., trade name Metolose MCE-25, number-average molecular weight: 636000 or larger) was provided as a water-soluble polymer. The cellulose in a wet cake form and the methylcellulose were added at a MCC/methylcellulose mass ratio of 90/10, and water was added thereto to adjust the solid content to 45% by mass. Cellulose complex E was obtained by kneading in the same way as in Example 1. The kneading energy was controlled by the kneading time of the planetary mixer, and the actual measurement value was 235 Wh/kg. The kneading temperature was 20 to 50°C.

The obtained cellulose complex E had a methylcellulose binding ratio of 95% and a viscosity ratio of 1.1. Also, the colloidal cellulose complex content was 46% by mass, the storage elastic modulus (G') was 0.8 Pa, the dynamic light scattering median size of the colloidal cellulose complex was 0.9 $\mu$m, the laser diffraction/scattering median size was 0.13 $\mu$m, and the median size of coarse particles was 7.2 $\mu$m. As a result of observing the cellulose complex E under AFM, it was confirmed that methylcellulose molecules were bound with the surface of cellulose and radiated.

A ceramic green body molded article was prepared and evaluated in the same way as in Example 1 except that the cellulose complex E was used. The results are shown in Table 1.

(Example 8)

By the same operation as in Example 1, cellulose hydrolysis was performed using commercially available DP pulp chopped. The resulting cellulose and xanthan gum (manufactured by Danisco Japan Ltd., trade name Grindsted Xanthan 200, number-average molecular weight: 636000 or larger) were added at a cellulose/xanthan gum mass ratio of 90/10, and water was added thereto to adjust the solid content to 40% by mass. Cellulose complex F was obtained by kneading in the same way as in Example 1. The kneading energy was controlled by the kneading time of the planetary mixer, and the actual measurement value was 70 Wh/kg. The kneading temperature was 20 to 85°C.

The obtained cellulose complex F had a water-soluble polymer (including xanthan gum) binding ratio of 87% and a viscosity ratio of 0.86. Also, the colloidal cellulose complex content was 73% by mass, the storage elastic modulus (G') was 0.8 Pa, the dynamic light scattering median size of the colloidal cellulose complex was 0.80 $\mu$m, the laser diffraction/scattering median size was 0.13 $\mu$m, and the median size of coarse particles was 8.7 $\mu$m. As a result of observing the cellulose complex F under AFM, it was confirmed that the water-soluble polymer was bound with the surface of cellulose and radiated.

A ceramic green body molded article was prepared and evaluated in the same way as in Example 1 except that the cellulose complex F was used. The results are shown in Table 1.

(Example 9)

A ceramic green body molded article was prepared and evaluated in the same way as in Example 1 except that the cellulose complex A obtained in Example 1 was used and blended with the ceramic such that the blending ratio was set to ceramic raw material powder/binder/cellulose complex = 94/5/1. The results are shown in Table 1.

(Example 10)

A ceramic green body molded article was prepared and evaluated in the same way as in Example 1 except that the cellulose complex A obtained in Example 1 was used and blended with the ceramic such that the blending ratio was set to ceramic raw material powder/binder/cellulose complex = 94/1/5. The results are shown in Table 1.

(Comparative Example 1)

A ceramic green body molded article was prepared and evaluated in the same way as in Example 1 except that: no cellulose complex was blended; and raw materials were blended at ceramic raw material powder/binder = 94/6. The results are shown in Table 1.

(Comparative Example 2)

Commercially available DP pulp was chopped and then hydrolyzed at 98°C for 20 minutes in 2 N hydrochloric acid. The obtained insoluble acid residue was filtered and washed to obtain wet cake containing 60% by mass of water (solid content: 40% by mass). 500 g of this wet cake was ground at 126 rpm for 60 minutes in a planetary mixer to obtain ground cake (average degree of polymerization: 240, crystallinity: 77%, particle L/D: 1.3) .

To this ground cake, 500 g of a 4.4% aqueous methylcellulose solution (manufactured by Shin-Etsu Chemical Co., Ltd., trade name Metolose MCE-25) was gradually added with stirring in a planetary mixer (46 rpm). Then, the mixture was placed in a SUS container (capacity: 1 L), homogenized at 5000 rpm for 10 minutes using a high-shear homogenizer (manufactured by PRIMIX Corp., trade name TK Homogenizer MARK II), and dried into a powder form containing 10% by mass of water using a spray dryer (manufactured by Tokyo Rikakikai Co., Ltd., trade name Spray Dryer SD-1000) to obtain cellulose mixture A.

The obtained cellulose mixture A had a methylcellulose binding ratio of 0% and a viscosity ratio of 0.68. Also, the colloidal cellulose mixture content was 65% by mass, the storage elastic modulus (G') was 0.05 Pa, the dynamic light scattering median size of the colloidal cellulose mixture was 0.29 $\mu$m, the laser diffraction/scattering median size was 0.17 $\mu$m, and the median size of coarse particles was 4.8 $\mu$m. As a result of observing the cellulose mixture A under AFM, no methylcellulose molecule was observed on the surface of cellulose.

A ceramic green body molded article was prepared and evaluated in the same way as in Example 1 except that the cellulose mixture A was used. The results are shown in Table 1.

(Specific surface areas and pore volumes of Examples 1 to 10 and Comparative Examples 1 and 2)

A cylindrical green body molded article obtained in each of Examples 1 to 10 and Comparative Examples 1 and 2 was cut into 10 mm in the height direction, added to a ventilated oven, degreased (preliminarily calcined and dried) at 200°C for 3 hours, subsequently added to an electric furnace, and calcined at 1100°C for 3 hours. The BET specific surface area and pore volume of each calcined product were measured. The results are shown in Table 1.

(Comparative Example 3)

A ceramic green body molded article was prepared and evaluated in the same way as in Example 1 except that the cellulose complex A obtained in Example 1 was used and blended with the ceramic such that the blending ratio was set to ceramic raw material powder/binder/cellulose complex = 76/3/21 (the amount of water added was set to 32.4% by mass based on the green body). As a result, the green body was dried out, the electric power of extrusion was 0.8 A or larger, the plasticity was poor, and the hardness was 15 mm or larger, though cracks on the surface of the ceramic green body molded article were ×.

(Example 11)

A ceramic green body molded article was prepared by the following method using the cellulose complex A obtained in Example 1. A kneaded product was prepared in the same way as in Example 1 except that: 300 g of a $\gamma$ alumina powder was used; the cellulose complex A and methylcellulose were blended at 3.0% by mass and 1.0% by mass, respectively, based on the total solid content; and the amount of water added was set to 210 g.

The hardness (green strength) was measured in a Kiya hardness tester (manufactured by Fujiwara Scientific Company Co., Ltd.) using the obtained kneaded product, and was consequently 70.6 N. A ceramic green body molded article was prepared by extrusion in the same way as in Example 1 except that the obtained kneaded product was used. As a result, cracks on the surface of the ceramic green body molded article were ⊚.

(Comparative Example 4)

A kneaded product was prepared in the same way as in Example 1 except that: 300 g of a $\gamma$ alumina powder was used; no cellulose complex was blended; 1.0% by mass of methylcellulose was blended; and the amount of water added was set to 195 g.

The hardness (green strength) was measured in a Kiya hardness tester (manufactured by Fujiwara Scientific Company Co., Ltd.) using the obtained kneaded product, and was consequently 56.5 N. A ceramic green body molded article was prepared by extrusion in the same way as in Example 1 except that the obtained kneaded product was used. As a result, cracks on the surface of the ceramic green body molded article were ×.

(Example 12)

A ceramic green body molded article was prepared by the following method using the cellulose complex A obtained in Example 1. A kneaded product was prepared in the same way as in Example 1 except that: 300 g of a $\gamma$ alumina powder was used; the cellulose complex A and polyethylene glycol were blended at 3.0% by mass and 10% by mass, respectively, based on the total solid content; and the amount of water added was set to 160 g.

The hardness (green strength) was measured in a Kiya hardness tester (manufactured by Fujiwara Scientific Company Co., Ltd.) using the obtained kneaded product, and was consequently 17.2 N. A ceramic green body molded article was prepared by extrusion in the same way as in Example 1 except that the obtained kneaded product was used. As a result, cracks on the surface of the ceramic green body molded article were ◎.

(Comparative Example 5)

A kneaded product was prepared in the same way as in Example 1 except that: 300 g of a γ alumina powder was used; no cellulose complex was blended; 3.0% by mass of polyethylene glycol was blended; and the amount of water added was set to 140 g.

The hardness (green strength) was measured in a Kiya hardness tester (manufactured by Fujiwara Scientific Company Co., Ltd.) using the obtained kneaded product, and was consequently 4 N. A ceramic green body molded article was prepared by extrusion in the same way as in Example 1 except that the obtained kneaded product was used. As a result, cracks on the surface of the ceramic green body molded article were ✕.

(Example 13)

Commercially available cellulose complex G (manufactured by Asahi Kasei Chemicals Corp., trade name Ceolus RC-N30, composition: cellulose/xanthan gum/dextrin = 75/5/20) was used as a raw material. The cellulose complex G had a water-soluble polymer (including xanthan gum) binding ratio of 85% and a viscosity ratio of 0.98. Also, the colloidal cellulose complex content was 75% by mass, the storage elastic modulus (G') was 0.5 Pa, the dynamic light scattering median size of the colloidal cellulose complex was 0.94 μm, the laser diffraction/scattering median size was 0.19 μm, and the median size of coarse particles was 8.7 μm. As a result of observing the cellulose complex G under AFM, it was confirmed that the water-soluble polymer was bound with the surface of cellulose and radiated. A ceramic green body molded article was obtained by the same operation as in Example 1 except that cordierite (manufactured by Marusu Glaze Co., Ltd., trade name Blended Cordierite AF-31, average particle size: 32.9 μm) as a raw material powder of a ceramic, hydroxypropylmethylcellulose (manufactured by Shin-Etsu Chemical Co., Ltd., trade name Metolose 60SH-4000, methoxy degree of substitution: 1.9, hydroxypropoxy molar substitution: 0.25, viscosity: 4000 mPa·s (2%)) as a binder, and the cellulose complex G were used and blended at ceramic raw material powder/binder/cellulose complex = 94/1.5/4.5 based on their respective solid contents (total amount: 500 g). The hardness (green strength) of the obtained ceramic green body molded article was 13.6 mm, the results of observing cracks were ◎, and the electric power of extrusion was 0.50 A.

The ceramic green body molded article thus obtained was added to a ventilated oven, degreased (preliminarily calcined and dried) at 200°C for 3 hours, subsequently added to an electric furnace, and calcined at 1100°C for 3 hours to obtain a ceramic molded article.

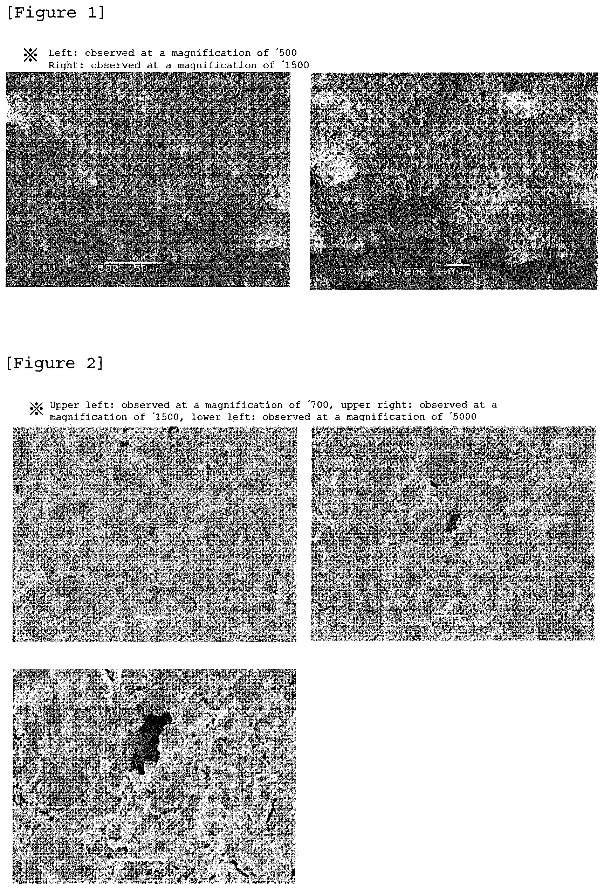

The ceramic green body molded article before degreasing and calcination, and the obtained ceramic molded article after calcination were surface-observed under a scanning electron microscope. The obtained results are shown in Figures 1 and 2. Figure 1 is the electron microscope image of the ceramic green body molded article, and Figure 2 is the electron microscope image of the ceramic molded article.

(Comparative Example 6)

A commercially available uncomplexed cellulose powder (manufactured by Asahi Kasei Chemicals Corp., trade name Ceolus TG-101, composition: cellulose = 100) was used as a raw material. The cellulose powder had a water-soluble polymer binding ratio of 0% and a viscosity ratio of 0.58. Also, the colloidal cellulose content was 11% by mass, the storage elastic modulus (G') was less than 0.1 Pa, the dynamic light scattering median size of the colloidal cellulose and the laser diffraction/scattering median size were immeasurable (almost the total amount was precipitated by centrifugation), and the median size of coarse particles was 34.6 μm. As a result of observing the cellulose powder under AFM, no water-soluble polymer was confirmed on the surface of cellulose. A ceramic green body molded article was obtained by the same operation as in Example 1 except that cordierite (manufactured by Marusu Glaze Co., Ltd., trade name Blended Cordierite AF-31, average particle size: 32.9 μm) as a raw material powder of a ceramic, hydroxypropylmethylcellulose (manufactured by Shin-Etsu Chemical Co., Ltd., trade name Metolose 60SH-4000, methoxy degree of substitution: 1.9, hydroxypropoxy molar substitution: 0.25, viscosity: 4000 mPa·s (2%)) as a binder, and the cellulose powder were used and blended at ceramic raw material powder/binder/cellulose = 94/1.5/4.5 based on their respective solid contents (total amount: 500 g).

The ceramic green body molded article thus obtained was added to a ventilated oven, degreased (preliminarily calcined and dried) at 200°C for 3 hours, subsequently added to an electric furnace, and calcined at 1100°C for 3 hours.

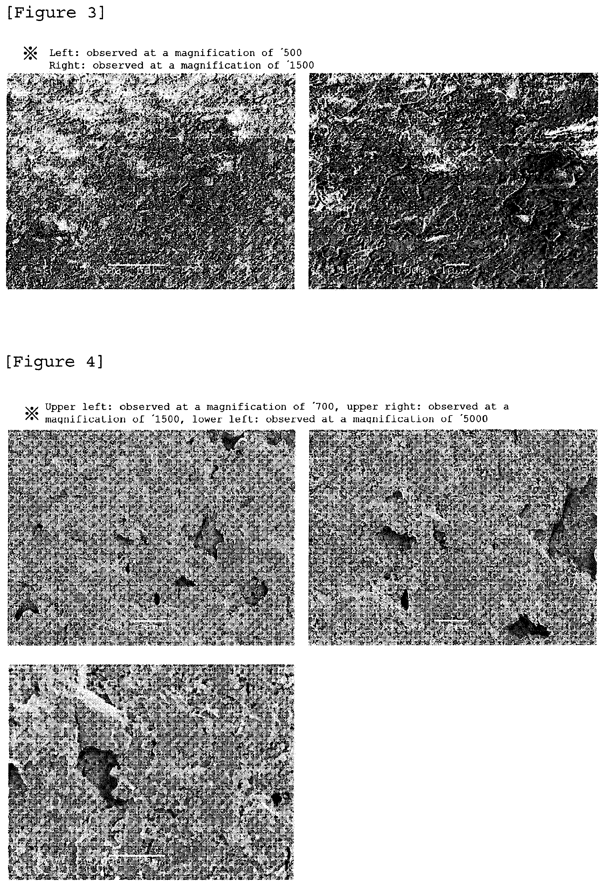

The ceramic green body molded article before degreasing and calcination, and the obtained ceramic molded article after calcination were surface-observed under a scanning electron microscope. The obtained results are shown in Figures 3 and 4. Figure 3 is the electron microscope image of the ceramic green body molded article, and Figure 4 is the electron microscope image of the ceramic molded article.

(Comparative Example 7)

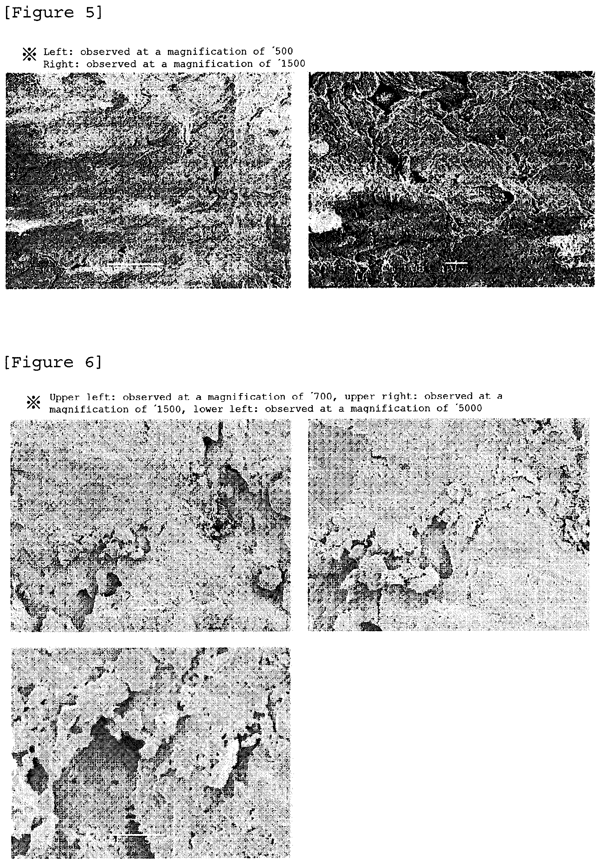

The ceramic green body molded article obtained in Comparative Example 1 was degreased (preliminarily calcined and dried) and calcined in the same way as in Example 13 and Comparative Example 6. The obtained ceramic green body molded article before calcination, and the obtained ceramic molded article after calcination were surface-observed under a scanning electron microscope. The obtained results are shown in Figures 5 and 6. Figure 5 is the electron microscope image of the ceramic green body molded article, and Figure 6 is the electron microscope image of the ceramic molded article.

Figures 1 and 2 are the SEM images of the ceramic green body molded article and the ceramic molded article obtained in Example 13 of the present application. From the SEM images, the ceramic green body molded article was found to exhibit smooth surface and to be less defective in terms of cracks, etc. Also, the obtained ceramic molded article after calcination also maintained the state of the ceramic green body molded article and had very smooth surface.

When compared at the same magnification, the cellulose powder used, which was not a cellulose complex, had considerably rough surface in the state of the ceramic green body molded article, and defects were observed, as shown in Figures 3 and 4. Furthermore, the obtained ceramic molded article after calcination also had relatively many defects, reflecting the state of the ceramic green body molded article.

Figures 5 and 6 show the results about the samples prepared using HPMC alone without the use of cellulose. Due to the absence of cellulose, both the ceramic green body molded article and the ceramic molded article had a rough structure and were most defective.

[Table 1]

| | | | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|---|
| Cellulose type | | | Complex A | Complex B | Complex C | Complex A | Complex A | Complex D | Complex E | Complex F | Complex A | Complex A | None | Mixture A |
| Composition | Cellulose | % by mass | 90 | 90 | 90 | 90 | 90 | 70 | 90 | 90 | 90 | 90 | - | 90 |
| | CMC-Na | % by mass | 10 | 10 | 10 | 10 | 10 | 5 | - | - | 10 | 10 | - | - |
| | Xanthan gum | % by mass | - | - | - | - | - | 5 | - | 10 | - | - | - | - |
| | Methylcellulose | % by mass | - | - | - | - | - | - | 10 | - | - | - | - | 10 |
| | Dextrin | % by mass | - | - | - | - | - | 20 | - | - | - | - | - | - |
| Complexation conditions | Solid content | % by | 37 | 45 | 30 | 37 | 37 | 45 | 45 | 40 | 37 | 37 | - | 22.2 |
| | Electric power | Wh/kg | 60 | 390 | 50 | 60 | 60 | 80 | 235 | 70 | 60 | 60 | - | 5 |
| | Temperature | °C | 20-85 | 20-40 | 20-90 | 20-85 | 20-85 | 20-65 | 20-50 | 20-85 | 20-85 | 20-85 | - | 20-30 |

EP 3 375 582 A1

| | | | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|---|
| Cellulose type | | | Complex A | Complex B | Complex C | Complex A | Complex A | Complex D | Complex E | Complex F | Complex A | Complex A | None | Mixture A |
| Physical properties of cellulose | Average degree of polymerization | - | 220 | 220 | 220 | 220 | 220 | 220 | 220 | 220 | 220 | 220 | - | 240 |
| | Crystallinity | % | 78 | 78 | 78 | 78 | 78 | 78 | 78 | 78 | 78 | 78 | - | 77 |
| | Particle L/D | - | 1.6 | 1.6 | 1.6 | 1.6 | 1.6 | 1.6 | 1.6 | 1.6 | 1.6 | 1.6 | - | 1.3 |
| | Binding ratio | % | 81 | 93 | 55 | 81 | 81 | 51 | 95 | 87 | 81 | 81 | - | 0 |
| | Viscosity ratio | - | 0.75 | 1.7 | 0.71 | 0.75 | 0.75 | 1.8 | 1.1 | 0.86 | 0.75 | 0.75 | - | 0.68 |
| | Colloid content | % by mass | 70 | 78 | 68 | 70 | 70 | 75 | 46 | 73 | 70 | 70 | - | 65 |
| | Storage elastic modulus | Pa | 0.45 | 5.5 | 0.35 | 0.45 | 0.45 | 1.2 | 0.8 | 0.8 | 0.45 | 0.45 | - | 0.05 |
| | DLS particle size | $\mu$m | 0.81 | 2.5 | 0.35 | 0.81 | 0.81 | 0.95 | 0.9 | 0.8 | 0.81 | 0.81 | - | 0.29 |
| | Core particle size | $\mu$m | 0.13 | 0.13 | 0.16 | 0.13 | 0.13 | 0.16 | 0.13 | 0.13 | 0.13 | 0.13 | - | 0.17 |
| | Coarse particle size | $\mu$m | 9.5 | 6.5 | 10.3 | 9.5 | 9.5 | 8.5 | 7.2 | 8.7 | 9.5 | 9.5 | - | 4.8 |
| | Crack * | - | ○ | ◎ | ○ | Δ | Δ | ◎ | ◎ | ◎ | ○ | ○ | × | × |
| | Specific surface area | m$^2$/g | 0.006 | 0.005 | 0.006 | 0.0095 | 0.006 | 0.005 | 0.005 | 0.005 | 0.009 | 0.004 | 0.015 | 0.01 |
| | Pore volume | m$^3$/g | 0.3 | 0.28 | 0.31 | 0.58 | 0.33 | 0.26 | 0.26 | 0.25 | 0.48 | 0.31 | 0.6 | 0.65 |
| | Electric power of extrusion | A | 0.5 | 0.5 | 0.4 | 0.61 | 0.78 | 0.5 | 0.55 | 0.5 | 0.52 | 0.6 | 0.65 | 0.55 |

EP 3 375 582 A1

(continued)

| | | | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|---|
| Cellulose type | | - | Complex A | Complex B | Complex C | Complex A | Complex A | Complex D | Complex E | Complex F | Complex A | Complex A | None | Mixture A |
| | Raw material powder | - | Cordierite | Cordierite | Cordierite | Cordierite | Cordierite | Cordierite | Cordierite | Cordierite | Cordierite | Cordierite | Cordierite | Cordierite |
| | Binder | - | HPMC | HPMC | HPMC | HPMC | HPMC | HPMC | HPMC | HPMC | HPMC | HPMC | HPMC | HPMC |
| Ceramic preparation conditions | Ceramic | % by mass | 94 | 94 | 94 | 94 | 87 | 94 | 94 | 94 | 94 | 94 | 94 | 94 |
| | Binder | % by mass | 3 | 3 | 3 | 5.5 | 3 | 3 | 3 | 3 | 5 | 1 | 6 | 3 |
| | Cellulose | % by mass | 3 | 3 | 3 | 0.5 | 10 | 3 | 3 | 3 | 1 | 5 | - | 3 |
| | Cellulose | parts by mass | 3.2 | 3.2 | 3.2 | 0.5 | 11.5 | 3.2 | 3.2 | 3.2 | 1.1 | 5.3 | - | 3.2 |
| | Amount of water added | % by mass | 32.5 | 32.5 | 32.5 | 32.5 | 37.5 | 32.5 | 32.5 | 32.5 | 32.5 | 32.5 | 32.5 | 32.5 |
| | Hardness | mm | 12.8 | 13.6 | 12.2 | 11.5 | 14.8 | 13.1 | 13.4 | 14.2 | 12.2 | 13.8 | 11 | 11.8 |
| | Crack * | - | ○ | ◎ | ○ | △ | △ | ◎ | ◎ | ◎ | ○ | ○ | × | × |
| Physical properties of ceramic | Specific surface area | m²/g | 0.006 | 0.005 | 0.006 | 0.0095 | 0.006 | 0.005 | 0.005 | 0.005 | 0.009 | 0.004 | 0.015 | 0.01 |
| | Pore volume | m³/g | 0.3 | 0.28 | 0.31 | 0.58 | 0.33 | 0.26 | 0.26 | 0.25 | 0.48 | 0.31 | 0.6 | 0.65 |
| | Electric power of extrusion | A | 0.5 | 0.5 | 0.4 | 0.61 | 0.78 | 0.5 | 0.55 | 0.5 | 0.52 | 0.6 | 0.65 | 0.55 |

*Evaluation criteria for the surface state of a molded article (the number of cracks/18 cm·10 samples) ◎: 5 or less sites, ○: 6 to 10 sites, △: 21 to 50 sites, ×: 51 or more sites

(Examples 14 to 16)

The ceramic green body obtained in each of Examples 2, 6, and 8 was used, and a two-stage extruding and kneading machine (FM-30 manufactured by Miyazaki Iron Works Co., Ltd., extrusion speed: 0.1 kg/hr) was used. While a sheet-shaped flat film extrusion die was adjusted, the ceramic green body was molded into a thin film having film thickness of 4 mils. The obtained thin film was cut into a square of 5 mm in each side, added to a ventilated oven, degreased (preliminarily calcined and dried) at 200°C for 3 hours, subsequently added to an electric furnace, and calcined at 1100°C for 3 hours to obtain a ceramic molded article. The ceramic molded articles obtained using the green body of Examples 2, 6, and 8 were used as samples of Examples 14, 15, and 16, respectively.

The film thicknesses and surface of the obtained ceramic molded articles after calcination were observed under a scanning electron microscope. As a result, all the ceramic molded articles had a film thickness of 4 mils or smaller, had neither cracks nor defects on the film surface, and exhibited a favorable film state.

(Examples 17 to 19)

The ceramic green body obtained in each of Examples 2, 6, and 8 was used. Thin films were prepared in the same way as in Examples 14 to 16 except that: the film thickness was changed to 3 mils; and the extrusion speed was 0.1 kg/hr. Their film thicknesses and shapes were observed in the same way as in Examples 14 to 16. The film thicknesses were confirmed to be 3 mils. However, sheet shrinkage was seen in Examples 17 to 19 compared with Examples 14 to 16.

As a result of decreasing the extrusion speed to 0.05 kg/hr in the aforementioned method for producing the thin film of 3 mils and producing and evaluating a sample in the same way as above, the obtained sheet had a film thickness of 3 mils and had neither shrinkage nor defects.

The present application is based on Japanese Patent Application No. 2015-223289 filed in the Japan Patent Office on November 13, 2015, the contents of which are incorporated herein by reference.

Industrial Applicability

The present invention provides a method for producing a ceramic molded article, comprising kneading a raw material of a ceramic, followed by extrusion, drying, and calcination.

**Claims**

1.   A method for producing a ceramic green body molded article, comprising:

a raw material blending step of kneading 100 parts by mass of a ceramic raw material with 0.1 to 20 parts by mass of a cellulose complex comprising cellulose and a water-soluble polymer to obtain a kneaded product; and
a step of molding the kneaded product.

2.   The method for producing the ceramic green body molded article according to claim 1, wherein the cellulose complex comprises 30 to 99% by mass of the cellulose and 1 to 70% by mass of the water-soluble polymer.

3.   The method for producing the ceramic green body molded article according to claim 1 or 2, wherein a binding ratio of the water-soluble polymer in the cellulose complex is 50% by mass or more.

4.   The method for producing the ceramic green body molded article according to any one of claims 1 to 3, wherein the cellulose complex satisfies following requirement:
(Requirement)
when viscosities of a water dispersion containing 1.0% by mass of the cellulose complex is measured at 25°C and 60°C, a viscosity ratio therebetween (the viscosity at 60°C/the viscosity at 25°C) is 0.70 or more.

5.   The method for producing the ceramic green body molded article according to any one of claims 1 to 4, wherein the water-soluble polymer comprised in the cellulose complex is a polysaccharide.

6.   A method for producing a ceramic molded article, comprising:

a raw material blending step of kneading 100 parts by mass of a ceramic raw material with 0.1 to 20 parts by mass of a cellulose complex comprising cellulose and a water-soluble polymer to obtain a kneaded product;

a step of molding the kneaded product to obtain a ceramic green body molded article; and
a step of subjecting the ceramic green body molded article to a drying and preliminary calcination step, followed by further calcination to obtain a ceramic molded article.

7. The method for producing the ceramic molded article according to claim 6, wherein the cellulose complex comprises 30 to 99% by mass of the cellulose and 1 to 70% by mass of the water-soluble polymer.

8. The method for producing the ceramic molded article according to claim 6 or 7, wherein a binding ratio of the water-soluble polymer in the cellulose complex is 50% by mass or more.

9. The method for producing the ceramic molded article according to any one of claims 6 to 8, wherein the cellulose complex satisfies following requirement:
(Requirement)
when viscosities of a water dispersion containing 1.0% by mass of the cellulose complex is measured at 25°C and 60°C, a viscosity ratio therebetween (the viscosity at 60°C/the viscosity at 25°C) is 0.70 or more.

10. The method for producing the ceramic molded article according to any one of claims 6 to 9, wherein the water-soluble polymer comprised in the cellulose complex is a polysaccharide.

11. The ceramic molded article according to any one of claims 1 to 10, wherein the ceramic molded article satisfies at least a BET specific surface area of less than 0.010 $m^2$/g or a pore volume of less than 0.60 $m^3$/g in a nitrogen adsorption method.

12. The ceramic molded article according to claim 11,
wherein at least a portion of a structure of the ceramic molded article comprises a thin-film structure having a film thickness of 6 mils or smaller.

[Figure 1]

※ Left: observed at a magnification of ´500
Right: observed at a magnification of ´1500

[Figure 2]

※ Upper left: observed at a magnification of ´700, upper right: observed at a
magnification of ´1500, lower left: observed at a magnification of ´5000

[Figure 3]

※ Left: observed at a magnification of ˊ500
Right: observed at a magnification of ˊ1500

[Figure 4]

※ Upper left: observed at a magnification of ˊ700, upper right: observed at a
magnification of ˊ1500, lower left: observed at a magnification of ˊ5000

[Figure 5]

※ Left: observed at a magnification of ´500
   Right: observed at a magnification of ´1500

[Figure 6]

※ Upper left: observed at a magnification of ´700, upper right: observed at a magnification of ´1500, lower left: observed at a magnification of ´5000

# EP 3 375 582 A1

## INTERNATIONAL SEARCH REPORT

International application No.

PCT/JP2016/083241

### A. CLASSIFICATION OF SUBJECT MATTER
*B28B3/20*(2006.01)i, *C04B35/632*(2006.01)i

According to International Patent Classification (IPC) or to both national classification and IPC

### B. FIELDS SEARCHED

Minimum documentation searched (classification system followed by classification symbols)
B28B3/20, C04B35/632

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
WPI

### C. DOCUMENTS CONSIDERED TO BE RELEVANT

| Category* | Citation of document, with indication, where appropriate, of the relevant passages | Relevant to claim No. |
|---|---|---|
| X<br>Y | JP 07-033534 A  (Shin Nippon Kagaku Kogyo Kabushiki Kaisha),<br>03 February 1995 (03.02.1995),<br>claims; paragraphs [0011] to [0013], [0023]<br>(Family: none) | 1,2,5-7,10<br>3,4,8,9,11,<br>12 |
| Y | WO 2013/122127 A1  (Asahi Kasei Chemicals Corp.),<br>22 August 2013 (22.08.2013),<br>claims; paragraph [0177]<br>& CN 104114037 A      & TW 201336426 A | 3,4,8,9 |
| Y | JP 2001-205082 A  (Hitachi Metals, Ltd.),<br>31 July 2001 (31.07.2001),<br>claims; paragraph [0030]<br>(Family: none) | 11,12 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 December 2016 (07.12.16) | 20 December 2016 (20.12.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7033534 A
- JP 51018441 A
- JP 2015223289 A

**Non-patent literature cited in the description**

- Japanese Pharmacopoeia. Hirokawa-Shoten Ltd,
- Japanese Pharmacopoeia. Hirokawa-Shoten Ltd